# EUROPEAN PATENT APPLICATION

(11) **EP 4 697 441 A1**
(43) Date of publication of application: **18.02.2026**
(21) Application number: 23933812.2
(22) Date of filing: 14.11.2023
(51) Int. Cl.: H01M 10/42, H04W 4/38, H04B 10/11

(54) **BATTERY SYSTEM AND ELECTRICAL DEVICE**

(30) Priority: 18.04.2023 CN 202310416204
(71) Applicant: Contemporary Amperex Technology Co., Limited, Ningde, Fujian 352100 (CN)
(72) Inventor: LI, Jinbiao, Ningde, Fujian 352100 (CN); HE, Yaohua, Ningde, Fujian 352100 (CN); DAN, Zhimin, Ningde, Fujian 352100 (CN)
(74) Representative: Gong, Jinping
(86) International application number: PCT/CN2023/131584
(87) International publication number: WO 2024/216945

(57) **Abstract**

The present application discloses a battery system and a power consuming device. The battery system includes: at least two battery groups and a relay apparatus. Each battery group includes a plurality of battery units. The battery units in each battery group are configured to form a first channel that uses the battery units as nodes and sequentially transmits specified data. The at least two battery groups are capable of respectively forming, with a control apparatus, second channels for transmitting the specified data. The relay apparatus is configured to respectively form, with the at least two battery groups, third channels for transmitting the specified data. The relay apparatus is further configured to forward the specified data between the battery groups. Therefore, the relay apparatus communicates with the battery groups through the third channel, and forwards the specified data between the battery groups, so that the flexibility of data transmission between the battery units and between the battery units and the control apparatus can be improved.

## Description

The present application claims priority to Chinese Patent Application No. 2023104162042, filed with the China National Intellectual Property Administration on April 18, 2023 and entitled "BATTERY SYSTEM AND POWER CONSUMING DEVICE", which is incorporated herein by reference in its entirety.

### TECHNICAL FIELD

The present application relates to the field of battery technologies, and in particular, to a battery system and a power consuming device.

### BACKGROUND

Energy conservation and emission reduction are a key to sustainable development. To be specific, adjustment of an energy structure is promoted, and development and application of a battery technology are promoted.

A battery system may be disposed in a power consuming device. The battery system is discharged to provide energy for the power consuming device to implement corresponding functions. The battery system may usually include a plurality of battery units. How to enable the plurality of battery units to communicate becomes a problem to be resolved urgently.

### SUMMARY

A main objective of the present application is to provide a battery system and a power consuming device, so as to resolve the foregoing technical problem existing in the related art.

To resolve the foregoing problem, the present application provides a battery system. The battery system includes: at least two battery groups and a relay apparatus. Each battery group includes a plurality of battery units. The battery units in each battery group are configured to form a first channel that uses the battery units as nodes and sequentially transmits specified data. The at least two battery groups are capable of respectively forming, with a control apparatus, second channels for transmitting the specified data. The relay apparatus is configured to respectively form, with the at least two battery groups, third channels for transmitting the specified data. The relay apparatus is further configured to forward the specified data between the battery groups. Therefore, cascaded communication is performed between the battery units in each battery group through the first channel. The battery groups communicate with the control apparatus through the second channels. In addition, the relay apparatus communicates with the battery groups through the third channels, and forwards the specified data between the battery groups, so that the flexibility of data transmission between the battery units and between the battery units and the control apparatus can be improved.

In some embodiments, at least a part of the battery units in the battery group and the control apparatus are configured to selectively transmit the specified data through the first channel in the group of the battery units, or transmit the specified data through the relay apparatus and the first channel of the another battery group. Therefore, at least two data transmission paths may be provided between at least a part of battery units and the control apparatus, thereby reducing a communication failure rate.

In some embodiments, the plurality of battery units include end battery units located at two ends of the battery group and a middle battery unit located between the end battery units. The first channel includes a first sub-channel and a second sub-channel that are opposite to each other. The control apparatus is configured to be respectively connected to the end battery units located at first ends of the at least two battery groups through the second channel. The relay apparatus is configured to be respectively connected to the end battery units located at second ends of the at least two battery groups through the third channel. Therefore, the control apparatus and the relay apparatus are configured to be respectively communicatively connected to the end battery units, thereby simplifying a communication architecture and improving the flexibility of data transmission between the battery units and between the battery units and the control apparatus.

In some embodiments, a transmission direction of the first sub-channel is from the second end to the first end, and a transmission direction of the second sub-channel is from the first end to the second end. The specified data includes uplink data uploaded from the battery unit to the control apparatus. The middle battery unit is configured to selectively send the uplink data to the control apparatus through the first sub-channel in the group of the middle battery unit, or send the uplink data to the control apparatus through the second sub-channel in the group of the middle battery unit, the relay apparatus, and the first sub-channel of the another battery group. Therefore, the middle battery unit may select different transmission paths to communicate with the control apparatus, thereby improving the flexibility of data transmission between the battery units and the control apparatus.

In some embodiments, the middle battery unit is configured to send, in response to all nodes in the first sub-channel in the group of the middle battery unit being in a normal communication state, the uplink data to the control apparatus through the first sub-channel in the group of the middle battery unit. Alternatively, the middle battery unit is configured to send, in response to a downstream node in the first sub-channel in the group of the middle battery unit being in a normal communication state, the uplink data to the control apparatus through the first sub-channel in the group of the middle battery unit. Therefore, the first sub-channel in the group is preferentially used to transmit the uplink data, thereby reducing a hop count of data transmission, and reducing a load of the another battery group during data transmission.

In some embodiments, the middle battery unit is configured to send, in response to a node in the first sub-channel in the group of the middle battery unit being in an abnormal communication state, the uplink data to the control apparatus through the second sub-channel in the group of the middle battery unit, the relay apparatus, and the first sub-channel of the another battery group. Therefore, when a communication abnormality exists on the first sub-channel in the group, transmission of the uplink data is not affected, thereby improving stability of communication between the battery units and the control apparatus.

In some embodiments, the middle battery unit located between the node in the abnormal communication state and the first end transmits the uplink data through the first sub-channel in the group of the middle battery unit. The middle battery unit located between the node in the abnormal communication state and the second end sends the uplink data to the control apparatus through the second sub-channel in the group of the middle battery unit, the relay apparatus, and the first sub-channel of the another battery group. Therefore, differential transmission is performed according to the positions of the battery units relative to the node in abnormal communication. For a battery unit capable of communicating with the control apparatus through the first sub-channel in the group of the battery unit, the first sub-channel in the group is preferentially used to transmit the uplink data. For a battery unit incapable of communicating with the control apparatus through the first sub-channel in the group of the battery unit, uplink data is transmitted to the control apparatus through the first sub-channel of another group. While the stability of communication between the battery units and the control apparatus is improved, the hop count of data transmission is reduced, and the load of the another battery group during data transmission is reduced.

In some embodiments, the transmission direction of the first sub-channel is from the second end to the first end, and the transmission direction of the second sub-channel is from the first end to the second end. The specified data includes downlink data issued by the control apparatus to the battery unit. The middle battery unit is configured to selectively receive the downlink data from the control apparatus through the second sub-channel in the group of the middle battery unit, or receive the downlink data from the control apparatus through the second sub-channel of the another battery group, the relay apparatus, and the first sub-channel in the group of the middle battery unit. Therefore, the middle battery unit may select different transmission paths to communicate with the control apparatus, thereby improving the flexibility of data transmission between the battery group and the control apparatus.

In some embodiments, the middle battery unit is configured to receive, in response to all nodes in the second sub-channel in the group of the middle battery unit being in a normal communication state, the downlink data from the control apparatus through the second sub-channel in the group. Alternatively, the middle battery unit is configured to receive, in response to an upstream node in the second sub-channel in the group being in a normal communication state, the downlink data from the control apparatus through the second sub-channel in the group of the middle battery unit. Therefore, the second sub-channel in the group is preferentially used to receive the downlink data, thereby reducing a hop count of data transmission, and reducing a load of the another battery group during data transmission.

In some embodiments, the middle battery unit is configured to receive, in response to the node in the second sub-channel in the group of the middle battery unit being in an abnormal communication state, the downlink data from the control apparatus through the second sub-channel of the another battery group, the relay apparatus, and the first sub-channel in the group of the middle battery unit. Therefore, when a communication abnormality exists on the second sub-channel in the group, transmission of the downlink data is not affected, thereby improving stability of communication between the battery units and the control apparatus.

In some embodiments, the middle battery unit located between the node in the abnormal communication state and the first end receives the downlink data from the control apparatus through the second sub-channel in the group of the middle battery unit, and the middle battery unit located between the node in the abnormal communication state and the second end receives the downlink data from the control apparatus through the second sub-channel of the another battery group, the relay apparatus, and the first sub-channel in the group of the middle battery unit. Therefore, differential transmission is performed according to the positions of the battery units relative to the node in abnormal communication. For a battery unit capable of communicating with the control apparatus through the second sub-channel in the group of the battery unit, the second sub-channel in the group is preferentially used to receive the downlink data. For a battery unit capable/incapable of communicating with the control apparatus through the second sub-channel in the group, the downlink data may be received through the second sub-channel of another group and the relay apparatus. While the stability of communication between the battery units and the control apparatus is improved, the hop count of data transmission is reduced, and the load of the another battery group during data transmission is reduced.

In some embodiments, the plurality of battery units include end battery units located at two ends of the battery group and a middle battery unit located between the end battery units. The control apparatus is configured to be respectively connected to the end battery units at first ends and/or second ends of the at least two battery groups through the second channel. The relay apparatus is configured to be respectively connected to the middle battery units of the at least two battery groups through the third channel. Therefore, the control apparatus is communicatively connected to the end battery units, and the relay apparatus is configured to be communicatively connected to the middle battery unit, thereby simplifying a communication architecture and further improving the flexibility of data transmission between the battery units and between the battery units and the control apparatus.

In some embodiments, the first channel includes a first sub-channel and a second sub-channel that are opposite to each other. Therefore, the flexibility of data transmission between the plurality of battery units in the battery group is increased.

In some embodiments, the plurality of battery units include end battery units located at two ends of the battery group and a middle battery unit located between the end battery units. The at least two battery groups include a first battery group and a second battery group. The relay apparatus includes a first relay apparatus. The first battery group and the second battery group are respectively disposed on two sides of the first relay apparatus. The first relay apparatus is connected to an end battery unit at a second end in the first battery group through the third channel and is connected to an end battery unit at a first end in the second battery group through the third channel. Therefore, the flexibility of data transmission between the battery units and between the battery units and the control apparatus can be improved while a communication architecture of the battery system is simplified.

In some embodiments, the control apparatus is configured to be respectively connected to an end battery unit at a first end in the first battery group and an end battery unit at a second end in the second battery group through the second channel. Alternatively, the relay apparatus includes a second relay apparatus. The control apparatus is configured to be respectively connected to the end battery unit at the first end in the first battery group through the second channel. The second relay apparatus is respectively connected to the end battery unit at the second end in the second battery group through the third channel. Therefore, the flexibility of data transmission between the battery units and between the battery units and the control apparatus can be further improved while a communication architecture of the battery system is simplified.

In some embodiments, the battery unit is further configured to detect a communication state of adjacent channel nodes. Therefore, a communication state of an adjacent node is detected by using the battery unit, so that real-time performance of communication state detection can be improved, to facilitate feedback of a data transmission policy in a targeted manner.

In some embodiments, the battery unit is configured to generate, in response to not receiving the specified data from an upstream node within a first predetermined time, a communication abnormal indication for the upstream node. Therefore, whether communication of the upstream nodes is abnormal is determined according to whether the specified data is received within the first predetermined time, so that real-time performance of communication state detection can be further improved, to facilitate feedback of a data transmission policy in a targeted manner.

In some embodiments, the battery unit is configured to generate, in response to not receiving a reception feedback from a downstream node within a second predetermined time after sending the specified data to the downstream node, a communication abnormal indication for the downstream node. Therefore, whether communication of the downstream nodes is abnormal is determined according to whether the feedback is received within the second predetermined time, so that real-time performance of communication state detection can be further improved, to facilitate feedback of a data transmission policy in a targeted manner.

In some embodiments, the battery unit is a battery cell. The battery cell includes a sensor, a processor, and a communication module. The sensor is configured to acquire a parameter of the battery cell. The communication module is configured to form at least the first channel. The processor generates the specified data based on the parameter and/or controls the sensor and/or the communication module based on the specified data. Therefore, it is convenient to acquire parameters of the battery units and/or manage the battery units in a targeted manner.

To resolve the foregoing problem, the present application provides another battery system. The battery system includes a plurality of battery units and a relay apparatus. The plurality of battery units are configured to communicate with a control apparatus and transmit specified data. The relay apparatus is configured to forward the specified data between at least a part of the battery units. Therefore, the battery units and the control apparatus may directly communicate with each other, thereby improving data transmission efficiency. In addition, the battery units may further forward the specified data by using the relay apparatus, thereby improving the flexibility of data transmission between the battery units and between the battery units and the control apparatus.

In some embodiments, the plurality of battery units respectively communicate with the control apparatus through a first channel. The at least a part of battery units respectively communicate with the relay apparatus through a second channel. Alternatively, the plurality of battery units are configured into at least two battery groups. The battery units in each battery group are configured to form a first channel that uses the battery units as nodes and sequentially transmits the specified data. The at least two battery groups are capable of respectively forming, with the control apparatus, second channels for transmitting the specified data. The relay apparatus is configured to respectively form, with the at least two battery groups, third channels for transmitting the specified data and to forward the specified data between the battery groups. Therefore, the battery units and the control apparatus may directly communicate with each other through the first channel, thereby improving data transmission efficiency. In addition, the battery units may further communicate with the relay apparatus through the second channel, thereby improving the flexibility of data transmission between the battery units and between the battery units and the control apparatus.

To resolve the foregoing problem, the present application provides a power consuming device. The power consuming device includes the foregoing battery system.

### BRIEF DESCRIPTION OF THE DRAWINGS

To describe the technical solutions in the embodiments of the present application or the related art more clearly, the following briefly introduces the accompanying drawings required in the embodiments. It is apparent that the accompanying drawings in the following description show only some embodiments of the present application. A person of ordinary skill in the art may still derive other drawings from these accompanying drawings without creative efforts.
FIG. 1 is a schematic structural top view of a battery system according to a first embodiment;
FIG. 2 is a schematic structural top view of a battery system according to a second embodiment;
FIG. 3 is a schematic structural top view of a light communication module according to one or more embodiments;
FIG. 4 is a schematic structural top view of a battery system according to a third embodiment;
FIG. 5 is a schematic structural top view of two adjacent battery units in a battery system according to one or more embodiments;
FIG. 6 is a schematic structural top view of two adjacent battery units in a battery system according to one or more embodiments;
FIG. 7 is a schematic structural top view of two adjacent battery units in a battery system according to one or more embodiments;
FIG. 8 is a schematic structural top view of three adjacent battery units in a battery system according to one or more embodiments;
FIG. 9 is a schematic structural top view of three adjacent battery units in a battery system according to one or more embodiments;
FIG. 10 is a schematic structural top view of a battery system according to a fourth embodiment;
FIG. 11 is a schematic structural diagram of a battery unit according to a first embodiment;
FIG. 12 is a schematic structural diagram of a battery unit according to a second embodiment;
FIG. 13 is a schematic structural top view of a battery system according to a fifth embodiment;
FIG. 14 is a schematic structural top view of a battery system according to a sixth embodiment;
FIG. 15 is a schematic structural top view of a battery system according to a seventh embodiment;
FIG. 16 is a schematic structural top view of a battery system according to an eighth embodiment;
FIG. 17 is a schematic structural top view of a battery system according to a ninth embodiment; and
FIG. 18 is a schematic structural top view of a battery system according to a tenth embodiment.

Reference numerals: battery system 1; battery group 10; battery unit 100; first end 100a; second end 100b; first battery group 11; first end 11a; second end 11b; second battery group 12; first end 12a; second end 12b; communication module 101; light communication module 110; light collection component 111; light transmitter T; first light transmitter T1; second light transmitter T2; light receiver R; first channel 120; first sub-channel 121; second sub-channel 122; housing 130; first pole 141; second pole 142; sensor 151; processor 152; first direction D1; second direction D2; spacing direction D3; intersection angle A; staggered distance L1; maximum size L2; first reference line segment B1; second reference line segment B2; center O1 of first reference line segment; center O2 of second reference line segment; control apparatus 200; second channel 210; relay apparatus 300; third channel 310.

### DETAILED DESCRIPTION

The embodiments of the technical solutions of the present application will be described in detail below with reference to the accompanying drawings. The following embodiments are only used to illustrate the technical solutions of the present application more explicitly, and are thus only interpreted as examples, rather than used to limit the protection scope of the present application.

Unless otherwise defined, meanings of all technical and scientific terms used in this specification are the same as those usually understood by a person skilled in the art to which the present application belongs. Terms used in this specification are merely intended to describe objectives of specific embodiments, but are not intended to limit the present application. The terms "include/comprise" and "have" and any variations thereof in the specification and claims of this application and the Brief Description of the Drawings are intended to cover non-exclusive inclusions.

In the descriptions of the embodiments of the present application, the technical terms "first", "second", and the like are only used for distinguishing different objects, and should not be understood as indicating or implying relative importance or implying the number, specific order or primary and secondary relationship of indicated technical features. In the descriptions of the embodiments of the present application, "a plurality of" means two or more, unless otherwise expressly and specifically defined.

"Embodiment" mentioned in this specification means that particular features, structures, or characteristics described with reference to the embodiment may be included in at least one embodiment of the present application. The appearances of the phrase in various positions in the specification are not necessarily all referring to the same embodiment, nor a separate or alternative embodiment that is mutually exclusive of other embodiments. A person skilled in the art explicitly or implicitly understands that the embodiments described in the specification may be combined with other embodiments.

In the descriptions of the embodiments of the present application, the term "and/or" is merely an association to describe associated objects, and means that there are three relationships. For example, A and/or B may mean that A exists alone, A and B exist at the same time, and B exists alone. In addition, the character "/" in this specification generally indicates an "or" relationship between the associated objects.

In the descriptions of the embodiments of the present application, the term "a plurality of" means two or more (including two). Similarly, "a plurality of groups" means two or more groups (including two groups), and "a plurality of pieces" means two or more pieces (including two pieces).

In the descriptions of the embodiments of the present application, the directions or positional relationships indicated by the technical terms such as "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", and "circumferential", are only for the convenience of describing the embodiments of the present application and simplifying the description, rather than indicating or implying that the involved device or element should have a specific orientation or should be configured or operated in the specific orientation, and thus cannot be understood as limiting the embodiments of the present application.

In the descriptions of the embodiments of the present application, unless otherwise explicitly specified and limited, the technical terms "mount", "connect", "connection", and "fix" should be understood in a broad sense. For example, the connection may be a fixed connection, a detachable connection, or an integral connection. Alternatively, the connection may be a mechanical connection or an electrical connection. The connection may be a direct connection, an indirect connection through a middle medium, internal communication between two components, or an interaction relationship between two components. A person of ordinary skill in the art may understand the specific meanings of the foregoing terms in the embodiments of the present application according to specific situations.

Nowadays, from the perspective of development of the market situation, batteries are applied increasingly. The batteries are not only used in energy storage power systems such as water power plant, fire power plant, wind power plant and solar power plant, but also in electric transportations such as electric bicycles, electric motorcycles, electric vehicles, as well as in military equipment, aerospace and other fields. With continuous expansion of application fields of power batteries, market demands therefor are also expanding.

Based on this, the present application provides a power consuming device. The power consuming device may include a battery system according to any of the following embodiments. The battery system may be used for a power supply serving as the power consuming device or various energy storage systems serving as energy storage elements. The power consuming device may include, but is not limited to, a mobile phone, a tablet, a laptop, an electric toy, an electric tool, a battery car, an electric vehicle, a ship, a spacecraft, or the like. The electric toy may include, but is not limited to, a fixed or mobile electric toy, for example, a game console, an electric automobile toy, an electric ship toy, and an electric airplane toy. The spacecraft may include an airplane, a rocket, a spacecraft, a spaceship, and the like. In some embodiments provided in the present application, an example in which the power consuming device is an Electric Vehicle (EV) is used.

The electric vehicle may be a fuel powered vehicle, a gas powered vehicle, or a new energy vehicle. The new energy vehicle may be a pure electric vehicle, a hybrid electric vehicle, or an extended range vehicle, etc. The battery system is disposed inside the electric vehicle. The battery system may be disposed at the bottom, head, or tail of the electric vehicle. The battery system may be configured to supply power to the electric vehicle. For example, the battery system may serve as a power supply for operating the electric vehicle. The electric vehicle may further include a controller and a motor. The controller is configured to control a battery pack to supply power to the motor, for example, to meet operating power requirements during starting, navigation, and traveling of the electric vehicle. The battery system may not only serve as a power supply for operating the electric vehicle, but may also serve as a power supply for driving the electric vehicle, in place of or partially in place of fuel or natural gas, to provide driving power for the electric vehicle.

To improve the performance of the battery system, the battery system may include at least one battery group. The battery group may include a plurality of battery units. The plurality of battery units may be connected in series, parallel, or series-parallel. Series-parallel connection means that both series connection and parallel connection exist among the plurality of battery units. The plurality of battery units may be directly connected in series, parallel, or series-parallel together. Then the plurality of battery units are integrally accommodated in a box. Certainly, the plurality of battery units may be first connected in series, parallel, or series-parallel to form a plurality of battery modules. The plurality of battery modules are connected in series, parallel, or series-parallel to form the battery system. The battery system may further include other structures. For example, the battery system may further include a bus component for achieving electrical connection between the plurality of battery units.

With consideration and investment of national governments and vehicle enterprises on electric vehicle projects, some large automobile manufacturers and battery suppliers make a lot of research and tests on various power batteries, and develop a related Battery Management System (BMS). The BMS has a great impact on safe running of the entire electric vehicle, selection of an entire vehicle control policy, selection of a charging mode, and operation costs. In both a running process and a charging process of the vehicle, the BMS needs to perform real-time monitoring and fault diagnosis of a state of the battery system, and inform an entire vehicle controller or a charger by using a bus, so as to use the battery system effectively and efficiently by using a proper control policy.

In some related embodiments, the battery management system may be directly connected to the battery system as a control apparatus, to obtain information of the battery units in the battery system. However, currently, all the battery units in the battery system are respectively communicatively connected to the battery management system. Therefore, the battery units need to be respectively connected to the battery management system or a corresponding bus by using corresponding lines, resulting in a complex line structure and a high failure rate of the battery system.

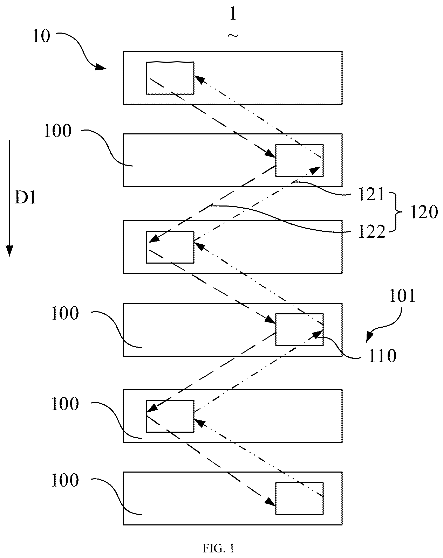

To resolve the technical problem existing in the related art, the present application provides a battery system. Refer to FIG. 1. FIG. 1 is a schematic structural top view of a battery system according to a first embodiment.

A battery system 1 includes at least one battery group 10. The battery group 10 includes a plurality of battery units 100. The plurality of battery units 100 are communicatively connected to each other, so that a multi-hop channel using the battery units 100 as nodes is formed between the plurality of battery units 100. In addition, data transmission is performed by using the multi-hop channel, so as to acquire data of each battery unit 100 and/or perform targeted management on each battery unit 100, thereby simplifying a line architecture of the system and improving reliability of the battery system 1.

In some embodiments, the plurality of battery units 100 may be regularly arranged. For example, the plurality of battery units 100 may be sequentially arranged along a first direction D1, so as to reduce a space occupied by the battery group 10 in the battery system 1. Optionally, the plurality of battery units 100 may be sequentially closely arranged or evenly spaced along the first direction D1. In some other embodiments, the plurality of battery units 100 may alternatively be irregularly arranged, unevenly spaced along the first direction D1, or the like.

In some embodiments, each battery unit 100 may be provided with a communication module 101. The plurality of battery units 100 may be communicatively connected to each other by using the communication module 101. The communication module 101 may enable the plurality of battery units 100 to perform wired communication or wireless communication. The wireless communication may include Bluetooth communication, radio frequency communication, light communication, or the like. Compared with the wired communication manner, the wireless communication manner may relieve a problem of complex routing of the battery system 1 caused by a large number of connection harnesses disposed between the battery units 100.

In some embodiments, the plurality of battery units 100 in each battery group 10 are configured to form a first channel 120 that uses the battery units 100 as nodes and sequentially transmits specified data. The specified data may include state data of the battery units 100, a control signal of a control apparatus 200, or the like. For example, the state data may include voltage data, power data, current data, temperature data, or pressure data. The control signal may include a sampling control signal for controlling the battery units 100 to acquire corresponding state data or another functional control signal for controlling the battery units 100 to perform an action such as balancing. Because the first channel 120 is a multi-hop channel using the battery units 100 as the nodes, state data acquired by each battery unit 100 is respectively transmitted to a battery unit 100 corresponding to a next-hop node, finally transmitted to a particular battery unit 100, and then uploaded to the control apparatus. In addition, the control signal may also be issued from the control apparatus to the particular battery unit 100, and then subjected to multi-hop forwarding through the first channel 120. Therefore, it is convenient to acquire data of each battery unit 100, and/or it is convenient to manage the battery units 100 in a targeted manner, thereby improving reliability of the battery system 1. Compared with that each battery unit 100 directly communicates with the control apparatus 200, complexity of the system can be effectively reduced.

In some embodiments, the plurality of battery units 100 in the same battery group 10 may not only perform unidirectional communication, but also perform bidirectional communication, to increase flexibility of data transmission. Specifically, the first channel 120 includes a first sub-channel 121 and a second sub-channel 122 that are opposite to each other. Data on the first sub-channel 121 may be transmitted from a last battery unit 100 in the battery group 10 to a first battery unit 100 in the battery group 10. Data on the second sub-channel 122 may be transmitted from the first battery unit 100 in the battery group 10 to the last battery unit 100 in the battery group 10. For example, the first sub-channel 121 and the second sub-channel 122 may be respectively configured to transmit different types of data. For example, the first sub-channel 121 may be configured to transmit voltage data, power data, current data, or the like, and the second sub-channel 122 may be configured to transmit temperature data, pressure data, or the like. Therefore, data is transmitted between the battery units 100 through the bidirectional channel, so that flexibility of data transmission between the plurality of battery units 100 may be increased, and stability of data transmission may be improved. For example, when one of the first sub-channel 121 and the second sub-channel 122 is damaged, the plurality of battery units 100 may further communicate with each other through the other of the first sub-channel 121 and the second sub-channel 122. For example, two communication modules 101 may be disposed on each battery unit 100. For example, the two communication modules 101 may include a first communication module and a second communication module. The first communication modules in the plurality of battery units 100 are communicatively connected to each other to form the first sub-channel 121. The second communication modules in the plurality of battery units 100 are communicatively connected to each other to form the second sub-channel 122.

In some embodiments, the communication module 101 may be a light communication module 110, so that adjacent battery units 100 perform light communication, thereby forming the first channel 120. Specifically, the plurality of battery units 100 may perform light communication in a space relay manner by using the light communication module 110. The space relay means that communication light generated by the light communication modules 110 propagates in a free space between the light communication modules 110. For example, a first light communication module 110 sends communication light, and the communication light passes through a space between the first light communication module 110 and a second light communication module 110, so as to be received by the second light communication module 110. Compared with an optical fiber propagation manner, light communication in the space relay manner can reduce complexity of a system architecture.

Specifically, the light communication module 110 may be configured to perform light communication by using air as a transmission medium. Compared with another liquid or gas transmission medium, a requirement on the sealing property of the system can be reduced, and the complexity of the system architecture can be reduced.

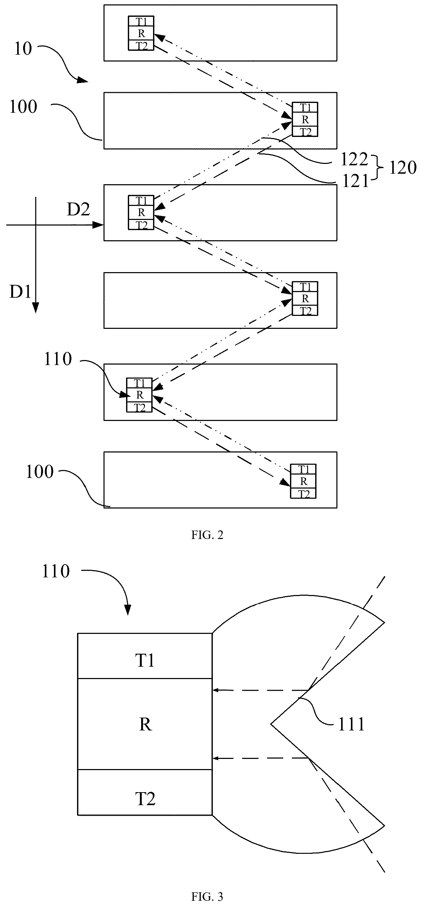

Refer to FIG. 2. FIG. 2 is a schematic structural top view of a battery system according to a second embodiment.

The light communication module 110 includes a first light transmitter T1, a second light transmitter T2, and a light receiver R. The first light transmitter T1 and the light receiver R that are located in different battery units 100 cooperate with each other to form the first sub-channel 121. The second light transmitter T2 and the light receiver R that are located in different battery units 100 cooperate with each other to form the second sub-channel 122. The first sub-channel 121 and the second sub-channel 122 share the light receiver R. Specifically, the first light transmitter T1 and the second light transmitter T2 can both send communication light. For example, the communication light may be visible communication light or infrared communication light. To enable the light receiver R to receive the communication light sent by the first light transmitter T1 and the second light transmitter T2 in different battery units 100, a light receiving angle of the light receiver R may be expanded. For example, the receiving angle of the light receiver R is between 30 degrees and 80 degrees, between 30 degrees and 70 degrees, or between 30 degrees and 60 degrees. Specifically, the light receiving angle may include 30 degrees, 40 degrees, 45 degrees, 60 degrees, 65 degrees, 70 degrees, 80 degrees, or the like.

For example, in the top view shown in FIG. 2, communication light sent by a second light transmitter T2 of a first battery unit 100 is received by a light receiver R of a second battery unit 100, and communication light is sent by a second light transmitter T2 of a second battery unit 100 and is received by a light receiver R of a third battery unit 100. The rest can be deduced by analogy, so that a light receiver R of a last battery unit 100 receives communication light sent by a second light transmitter T2 of a previous battery unit 100, thereby forming the second sub-channel 122. Similarly, in the top view shown in FIG. 2, communication light sent by a first light transmitter T1 of the last battery unit 100 is received by a light receiver R of a second-to-last battery unit 100, and communication light sent by a first light transmitter T1 of the second-to-last battery unit 100 is received by a light receiver R of a third-to-last battery unit 100. The rest can be deduced by analogy, so that the light receiver R of the first battery unit 100 receives communication light sent by the first light transmitter T1 of the second battery unit 100, thereby forming the first sub-channel 121.

In this embodiment, all the light communication modules 110 may include the first light transmitter T1, the second light transmitter T2, and the light receiver R. In other embodiments, the light communication module 110 of a middle battery unit 100 includes the first light transmitter T1, the second light transmitter T2, and the light receiver R. The light communication module 110 of an end battery unit 100 includes the first light transmitter T1 and the light receiver R. The light communication module 110 of a head battery unit 100 includes the second light transmitter T2 and the light receiver R. Therefore, bidirectional communication between the battery units 100 may be implemented by using one light receiver R. Compared with two light receivers R, material costs are reduced.

In some embodiments, the light communication modules 110 of the adjacent battery units 100 are staggered from each other along a second direction D2 perpendicular to the first direction D1, thereby reducing a problem of cross-talk during light communication between the light communication modules 110 of the adjacent battery units 100. Specific embodiments in which the light communication modules 110 of the adjacent battery units 100 are staggered from each other along the second direction D2 are discussed in detail below.

In this embodiment, light output directions of the first light transmitter T1 and the second light transmitter T2 are respectively obliquely disposed relative to the first direction D1, and transmission components in the first direction D1 are opposite to each other, so that light outputted by the first light transmitter T1 and the second light transmitter T2 on a same battery unit 100 is respectively incident on the light receivers R of adjacent battery units 100 on two sides. A transmission component of the light output direction in the first direction D1 may be similar to a component of a vector in a direction. For example, a transmission component of the light output direction of the first light transmitter T1 in the first direction D1 may be understood as: a projection of an output direction of the first light transmitter T1 in the first direction D1. A transmission component of the light output direction of the second light transmitter T2 in the first direction D1 may be understood as: a projection of an output direction of the second light transmitter T2 in the first direction D1. For example, in the top view shown in FIG. 2, a plurality of battery units 100 are arranged along the first direction D1. A light communication module 110 of a third battery unit 100 is used as an example for description. A light output direction of a first light transmitter T1 of the third battery unit 100 is obliquely upward, and a light output direction of a second light transmitter T2 of the third battery unit 100 is obliquely downward, so that the light output directions thereof are obliquely disposed relative to the first direction D1. In this way, a transmission component of the second light transmitter T2 of the third battery unit 100 in the first direction D1 is straight downward, and a transmission component of the first light transmitter T1 of the third battery unit 100 in the first direction D1 is straight upward. Therefore, light outputted by the first light transmitter T1 of the third battery unit 100 is incident on a light receiver R of the second battery unit 100, and light outputted by the second light transmitter T2 of the third battery unit 100 is incident on a light receiver R of a fourth battery unit 100. Therefore, sharing of the light receiver R may be implemented in a relatively simple layout manner, and a problem of mutual cross-talk between the light communication modules 110 can be further relieved.

In some embodiments, in three light communication modules 110 of three battery units 100 consecutively arranged, the end light communication modules 110 are disposed on a same side of the middle light communication module 110 in the second direction D2. The three battery units 100 consecutively arranged may be understood as: any three consecutive battery units 100 among the plurality of battery units 100 arranged along the first direction D1. In the top view shown in FIG. 2, the three battery units 100 consecutively arranged may be a first battery unit 100, a second battery unit 100, and a third battery unit 100 from top to bottom, or may be a second battery unit 100, a third battery unit 100, and a fourth battery unit 100 from top to bottom. That the light communication modules 110 of the end battery units 100 are disposed on a same side of the light communication module 110 of the middle battery unit 100 in the second direction D2 may be understood as: by using the middle battery unit 100 as a boundary in the second direction D2, an upstream side of the middle battery unit 100 and a downstream side of the middle battery unit 100 are divided. Therefore, the light communication modules 110 of the end battery units 100 are both located on the upstream side of the middle battery unit 100, or both located on the downstream side of the middle battery unit 100. For example, in the top view shown in FIG. 2, when three battery units 100 consecutively arranged are a first battery unit 100, a second battery unit 100, and a third battery unit 100 from top to bottom, the middle battery unit 100 is the second battery unit 100, and the end battery units 100 are the first battery unit 100 and the third battery unit 100. In the second direction D2, the end battery units 100 are located on the upstream side of the middle battery unit 100. Similarly, when the three battery units 100 consecutively arranged are a second battery unit 100, a third battery unit 100, and a fourth battery unit 100 from top to bottom, the middle battery unit 100 is the third battery unit 100, and the end battery units 100 are the second battery unit 100 and the fourth battery unit 100. In the second direction D2, the end battery units 100 are located on the downstream side of the middle battery unit 100. Therefore, it is beneficial for the light communication modules 110 to be staggered relative to each other in the second direction D2, thereby relieving the problem of mutual cross-talk between the light communication modules 110.

In some embodiments, light outputted by the first light transmitter T1 and the second light transmitter T2 is respectively configured to at least partially cover adjacent light receivers R to which respective transmission components are directed. The at least a part may be all light or a part of light outputted by a light transmitter. When a part of light is received, remaining light that is not received may be lost in a transmission process, or the remaining light that is not received may be emitted to another position outside a light receiving range of the light receiver R. For example, in the top view shown in FIG. 2, by using the light communication module 110 of the third battery unit 100 as an example, a transmission component of light outputted by the first light transmitter T1 is obliquely upward, and is directed to the light receiver R of the second battery unit 100. Therefore, the light outputted by the first light transmitter T1 is at least partially received by the light receiver R of the second battery unit 100. Similarly, light outputted by the second light transmitter T2 is at least partially received by the light receiver R of the fourth battery unit 100. In this way, it can be relieved that the light outputted by the light transmitter T is received by the plurality of light receivers R, thereby further relieving the problem of mutual cross-talk between the light communication modules 110.

In some embodiments, a processor is disposed on the battery unit 100. The processor is connected to the light communication module 110, and selectively controls, according to a direction in which specified data is to be transmitted, the first light transmitter T1 and the second light transmitter T2 to emit light. The specified data may include state data of the battery units 100, a control signal of a control apparatus 200, or the like. For example, the state data may include voltage data, power data, current data, temperature data, or pressure data. The direction in which specified data is to be transmitted may be a direction from the first battery unit 100 to the last battery unit 100, namely a transmission direction along the second sub-channel 122. Alternatively, the direction in which specified data is to be transmitted may be a direction from the last battery unit 100 to the first battery unit 100, namely a transmission direction along the first sub-channel 121. When the first sub-channel 121 is selected, the first light transmitter T1 may be controlled to emit light. When the second sub-channel 122 is selected, the second light transmitter T2 may be controlled to emit light. Therefore, the problem of mutual cross-talk between the light communication modules 110 is further relieved.

Refer to FIG. 2 to FIG. 3. FIG. 3 is a schematic structural top view of a light communication module according to one or more embodiments.

Each light communication module 110 further includes a light collection component 111. The light collection component 111 is configured to collect light outputted by the first light transmitter T1 and the second light transmitter T2 of another light communication module 110 onto the light receiver R of the light collection component. Specifically, the light collection component 111 may be an optical element, such as a reflective prism and/or a focusing lens. The light collection component 111 may include two groups of optical elements. One group of optical elements is located in a light path of light outputted by the first light transmitter T1 and performs processing such as reflection or focusing on the light, so that the light outputted by the first light transmitter T1 is collected onto the light receiver R. Another group of optical elements is located in a light path of light outputted by the second light transmitter T2 and performs processing such as reflection or focusing on the light, so that the light outputted by the second light transmitter T2 is collected onto the light receiver R. For example, in the embodiment shown in FIG. 3, the light collection component 111 includes two condensing surfaces and two reflective surfaces. One group of condensing surfaces and reflective surfaces are configured to collect communication light generated by the light communication module 110 of the battery unit 100 on one side, and the other group of condensing surfaces and reflective surfaces are configured to collect communication light generated by the light communication module 110 of the battery unit 100 on the other side. Therefore, the reliability of light communication can be improved, and difficulty in arranging the light communication module 110 can be reduced.

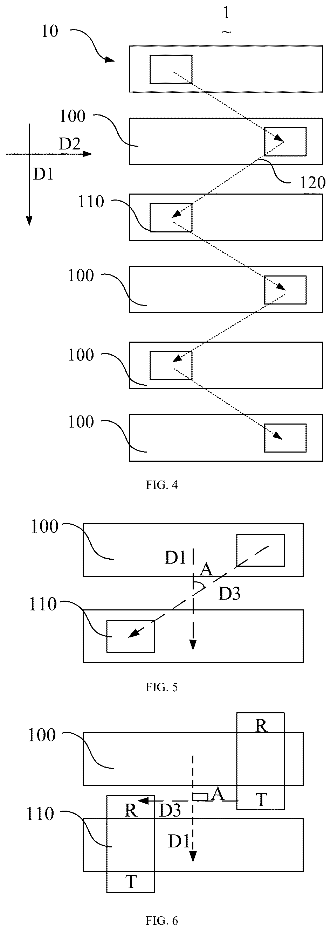

In the foregoing embodiment, bidirectional communication may be implemented between the plurality of battery units 100. In other embodiments, the plurality of battery units 100 may perform only unidirectional communication. When the plurality of battery units 100 communicate with each other by using the light communication modules 110, to relieve mutual cross-talk between the light communication modules 110, misplacement of the light communication modules 110 of two adjacent battery units 100 may be used. Refer to FIG. 1 to FIG. 4. FIG. 4 is a schematic structural top view of a battery system according to a third embodiment.

The battery group 10 includes a plurality of battery units 100 sequentially arranged along a first direction D1. A light communication module 110 is disposed on each battery unit 100. At least a part of the battery units 100 perform light communication by using the light communication modules 110 in a space relay manner. The light communication modules 110 of the adjacent battery units 100 are staggered relative to each other in a second direction D2 perpendicular to the first direction D1. Therefore, a problem of mutual cross-talk between the light communication modules 110 when light communication is performed in a space relay manner can be reduced. Specifically, because the communication light generated by the light communication modules 110 propagates in space, in addition to two light communication modules 110 that need to establish a communicative connection, the communication light propagating in space may alternatively be incident into another light communication module 110, thereby forming cross-talk. The foregoing cross-talk problem can be effectively resolved by the light communication modules 110 of the adjacent battery units 100 being staggered from each other in the second direction D2 perpendicular to the first direction D1. The following provides detailed descriptions with reference to different networking manners of the light communication module 110.

Further, at least a part of the battery units 100 perform light communication through the light communication module 110 by using air as a transmission medium. Compared with another liquid or gas transmission medium, a requirement on the sealing property of the system can be reduced, and the complexity of the system architecture can be reduced.

Optionally, in each battery group 10, the adjacent battery units 100 perform light communication by using the light communication module 110, to form a first channel 120 that sequentially uses the adjacent battery units 100 as next-hop nodes. The first channel 120 is formed by sequentially performing light communication between the adjacent battery units 100. For example, in the top view shown in FIG. 4, the battery group 10 includes six battery units 100 in total. The first battery unit 100 sends communication light to the second battery unit 100. The second battery unit 100 sends the communication light to the third battery unit 100. The rest can be deduced by analogy, the fifth battery unit 100 sends the communication light to the sixth battery unit 100, and therefore, the first channel 120 sequentially using the adjacent battery units 100 as next-hop nodes is formed. Therefore, a multi-hop channel is formed in the battery group 10, to facilitate data transmission.

Compared with that the light communication modules 110 of the battery units 100 are linearly arranged along the first direction D1, because the light communication modules 110 of the adjacent battery units 100 are configured to be staggered from each other in the second direction D2, when the adjacent battery units 100 communicate with each other by using the light communication modules 110 to form the first channel 120, a transmission direction of communication light of the light communication modules 110 may be staggered from a light receiving direction of the light communication modules 110 on other non-adjacent battery units 100, or a transmission distance from the communication light of the light communication modules 110 to the light communication modules 110 on the other non-adjacent battery units 100 is increased. For example, using the light communication module 110 on the first battery unit 100 as an example, when the light communication module 110 on the first battery unit 100 communicates with the light communication module 110 on the second battery unit 100 adjacent thereto to form the first channel 120, light receiving directions of the light communication module 110 on the first battery unit 100 and the light communication module 110 on the third battery unit 100 not adjacent thereto are staggered, and a light transmission distance with the light communication module 110 on the fourth battery unit 100 not adjacent thereto is increased, thereby effectively relieving light cross-talk between the light communication module 110 on the third battery unit 100 and the light communication module 110 on the fourth battery unit 100.

Refer to FIG. 5 and FIG. 6. FIG. 5 and FIG. 6 are schematic structural top views of two adjacent battery units in a battery system according to one or more embodiments, respectively.

An intersection angle A formed by a spacing direction D3 between the light communication modules 110 of the adjacent battery units 100 and the first direction D1 is greater than or equal to 10 degrees and is less than or equal to 90 degrees. For example, the intersection angle A may be between 20 degrees to 80 degrees, the intersection angle A may be between 30 degrees to 70 degrees, the intersection angle A may be between 30 degrees to 60 degrees, the intersection angle A may be between 40 degrees to 50 degrees, or the like. Specifically, the intersection angle A may include, but is not limited to, 10 degrees, 20 degrees, 30 degrees, 35 degrees, 40 degrees, 45 degrees, 50 degrees, 60 degrees, 70 degrees, 80 degrees, 90 degrees, or the like. The spacing direction D3 may be understood as a straight line on which a connection line between center points of two adjacent light communication modules 110 is located, or may alternatively be understood as a straight line on which a connection line between any two points of two adjacent light communication modules 110 is located. In the top view shown in FIG. 5, the foregoing range of the intersection angle A may be implemented by adjusting positions of the light communication modules 110 on the respective battery units 100 and a spacing distance between the battery units 100 along the first direction D1.

In the top view shown in FIG. 6, to increase the intersection angle A, the light transmitters T and the light receivers R of two adjacent light communication modules 110 may extend out of the respective battery units 100 in the first direction D1, so that the intersection angle A between the spacing direction D3 between the light transmitter T of a previous light communication module 110 and the light receiver R of a subsequent light communication module 110 and the first direction D1 is approximate to or reaches 90 degrees. Therefore, by setting a proper range of the intersection angle A, the problem of mutual cross-talk between the light communication modules 110 can be further relieved.

Further, an intersection angle A formed by the spacing direction D3 between the light communication modules 110 of the adjacent battery units 100 and the first direction D1 is greater than or equal to 30 degrees and is less than or equal to 60 degrees. For example, the intersection angle A may be between 40 degrees to 50 degrees, the intersection angle A may be between 40 degrees to 60 degrees, or the like. Specifically, the intersection angle A may include, but is not limited to, 30 degrees, 35 degrees, 40 degrees, 45 degrees, 50 degrees, 55 degrees, 60 degrees, or the like. Therefore, by setting the intersection angle A to be greater than or equal to 30 degrees, a staggered distance between the light communication modules 110 on two adjacent battery units 100 in the second direction D2 can be improved, and light cross-talk can be reduced. Further, by setting the foregoing intersection angle A to be less than or equal to 60 degrees, it is easier for the light communication module 110 on each battery unit 100 to communicate with the light communication modules 110 on the battery units 100 on two sides, thereby reducing difficulty in cooperation between the light communication modules. Specifically, as described above, if the foregoing intersection angle A is set to be excessively large, the light communication modules 110 on two adjacent battery units 100 need to be very close to each other in the first direction D1, thereby increasing difficulty in cooperation.

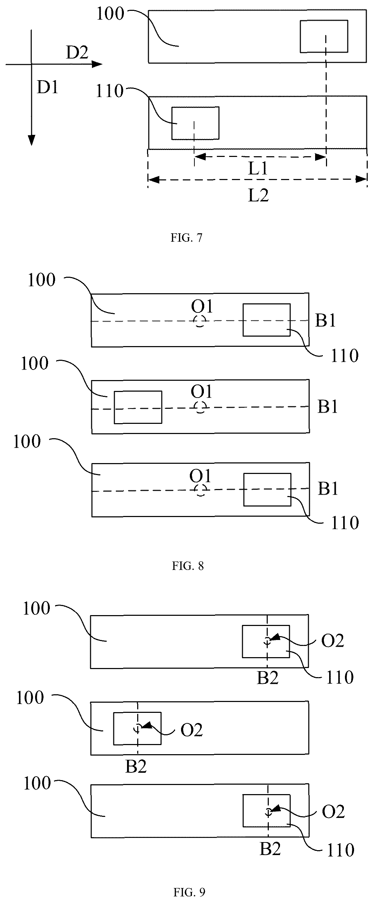

Refer to FIG. 7. FIG. 7 is a schematic structural top view of two adjacent battery units in a battery system according to one or more embodiments.

A staggered distance L1 between the light communication modules 110 of adjacent battery units 100 along the second direction D2 is set to be greater than or equal to one fifth of a maximum size L2 of the battery unit 100 along the second direction D2. Specifically, the staggered distance L1 may be set to two fifths, three fifths, four fifths, or the like of the maximum size L2. The maximum size L2 of the battery unit 100 along the second direction D2 may be understood as: a size between two side edges of the battery unit 100 in the second direction D2. The staggered distance L1 may be understood as: projecting two adjacent light communication modules 110 into a same battery unit 100 along the first direction D1, and then respectively selecting a distance between any points of the two light communication modules 110 in the second direction D2. The any points may be midpoints of the light communication modules 110, or points on two side edges of the two light communication modules 110 facing in the second direction D2, or points on two side edges of the two light communication modules 110 facing away in the second direction D2. Therefore, by setting a proper staggered distance L1, the problem of mutual cross-talk between the light communication modules 110 can be further relieved.

Refer to FIG. 8. FIG. 8 is a schematic structural top view of three adjacent battery units in a battery system according to one or more embodiments.

Each battery unit 100 has a first reference line segment B1 connecting two side edges of the battery unit 100 along the second direction D2. The light communication modules 110 of at least a part of the battery units 100 are staggered from a center O1 of the first reference line segment B1 in the second direction D2. That the light communication module 110 is staggered from the center O1 of the first reference line segment B1 may be understood as non-coincidence, or may be understood as that the center O1 of the first reference line segment B1 is staggered from the center of the light communication module 110. The two side edges along the second direction D2 may be two opposite side edges of a length of the battery unit 100. For example, in a top view shown in FIG. 9, an end surface of the battery unit 100 may be rectangular. In this case, the two side edges are two opposite side edges of the length. The first reference line segment B1 may be understood as a length line segment of each battery unit 100. For example, the first reference line segment B1 may pass through centers of the two opposite side edges, and the center O1 of the first reference line segment B1 may be understood as a midpoint of each battery unit 100 in the length. The light communication module 110 is staggered from the center O1 of the first reference line segment B1 in the second direction D2. To be specific, the light communication module 110 does not coincide with the center O1 of the first reference line segment B1. The light communication module 110 may be located on a same side of the center O1 of the first reference line segment B1 in the second direction D2, or located on different sides of the center O1 of the first reference line segment B1 in the second direction D2. Therefore, it is beneficial for the light communication modules 110 to be staggered relative to each other in the second direction D2, thereby relieving the problem of mutual cross-talk between the light communication modules 110.

Further, the light communication modules 110 of the adjacent battery units 100 are respectively located at two sides of the center O1 of the first reference line segment B1 in the second direction D2. That the light communication modules 110 of the adjacent battery units 100 are respectively located at two sides of the center O1 of the first reference line segment B1 may be understood as: the two light communication modules 110 do not have an intersection with the center O1 of the first reference line segment B1, and are located at two sides of the center. Alternatively, centers of the two light communication modules 110 are located at two sides of the center O1 of the first reference line segment B1. Therefore, it is beneficial for the light communication modules 110 to be staggered relative to each other in the second direction D2, thereby relieving the problem of mutual cross-talk between the light communication modules 110.

Refer to FIG. 9. FIG. 9 is a schematic structural top view of three adjacent battery units in a battery system according to one or more embodiments.

Each battery unit 100 has two other side edges oppositely disposed along the first direction D1. The light communication modules 110 of at least a part of the battery units 100 are centrally disposed relative to the two other side edges in the first direction D2. The two other side edges along the first direction D1 may be two opposite side edges of a width of the battery unit 100. For example, in the top view shown in FIG. 9, an end surface of the battery unit 100 may be rectangular. In this case, the two other side edges are the two opposite side edges of the width. It should be noted that, the light communication module 110 of the battery unit 100 is relatively centered relative to the two other side edges in the first direction D2, and is not necessarily located at a middle position of the two other side edges in the first direction D2. A slight deviation may also be considered as being centered. For example, when the light communication module 110 is centered, a ratio of an absolute value of a difference between two distances from the light communication module to the two other side edges in the first direction D1 to either of the two distances is less than or equal to a predetermined threshold. The predetermined threshold may be within a range of 0 to 30%, for example, 0, 5%, 10%, 15%, 20%, 25%, and 30%. For example, in the top view shown in FIG. 9, each battery unit 100 may have a second reference line segment B2 connecting two other side edges of the battery unit 100 along the first direction D1. The second reference line segment B2 may be understood as a width line segment of each battery unit 100. When the light communication module 110 of the battery unit 100 is centered in the first direction D2, the center of the light communication module 110 may completely coincide with a center O2 of the second reference line segment B2, so that the foregoing predetermined threshold is 0. When the center of the light communication module 110 slightly deviates from the center O2 of the second reference line segment B2, it may be considered that the light communication module 110 is centered relative to the two other side edges provided that the foregoing predetermined threshold is satisfied. Therefore, because the light communication module 110 is centrally disposed relative to the respective battery unit 100 in the first direction D1, it is convenient to perform light communication with the communication modules 110 of the battery units 100 on two sides.

In some embodiments, in three light communication modules 110 of three battery units 100 consecutively arranged, the end light communication modules 110 are disposed on a same side of the middle light communication module 110 in the second direction D2. The three battery units 100 consecutively arranged may be understood as: for any three consecutive battery units 100 among the plurality of battery units 100 arranged along the first direction D1, correspondingly, three light communication modules 110 on the three consecutive battery units 100 are three consecutive light communication modules 110. That the end light communication modules 110 are disposed on a same side of the middle light communication module 110 in the second direction D2 may be understood as: by using the middle battery unit 100 as a boundary in the second direction D2, an upstream side of the middle battery unit 100 and a downstream side of the middle battery unit 100 are divided. Therefore, the light communication modules 110 of the end battery units 100 are both located on the upstream side of the middle battery unit 100, or both located on the downstream side of the middle battery unit 100. Therefore, it is beneficial for the light communication modules 110 to be staggered relative to each other in the second direction D2, thereby further relieving the problem of mutual cross-talk between the light communication modules 110.

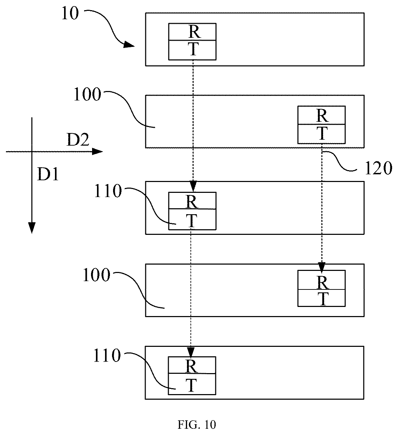

Refer further to FIG. 10. FIG. 10 is a schematic structural top view of a battery system according to a fourth embodiment.

In each battery group 10, the non-adjacent battery units 100 perform light communication by using the light communication module 110, to form a first channel 120 that sequentially uses the non-adjacent battery units 100 as next-hop nodes. Because the light communication modules 110 of adjacent battery units 100 are staggered relative to each other along the second direction D2 perpendicular to the first direction D1, mutual cross-talk between the light communication modules 110 can be relieved by increasing a spacing between the light communication modules 110 of adjacent hop nodes. For example, in the top view shown in FIG. 10, the battery system 1 includes five battery units 100. Light communication modules 110 of adjacent battery units 100 among the five battery units 100 are staggered relative to each other in the second direction D2. A light transmitter T of the first battery unit 100 faces a light receiver R of the third battery unit 100. A light transmitter T of the second battery unit 100 faces a light receiver R of the fourth battery unit 100. A light transmitter T of the third battery unit 100 faces a light receiver R of the fifth battery unit 100. Communication light sent by the light transmitter T of the first battery unit 100 may be received by the light receiver R of the third battery unit 100. The communication light sent by the light transmitter T of the third battery unit 100 may be received by the light receiver R of the fifth battery unit 100, thereby establishing the first channel 120. Because the third battery unit 100 and the fifth battery unit 100 are spaced by the fourth battery unit 100, when the light communication module 110 of the first battery unit 100 is in light communication with the light communication module 110 of the third battery unit 100, an intensity or a probability that the light communication module 110 of the fifth battery unit 100 receives communication light sent by the light communication module 110 of the first battery unit 100 is obviously reduced, thereby relieving mutual cross-talk between the light communication modules 110.

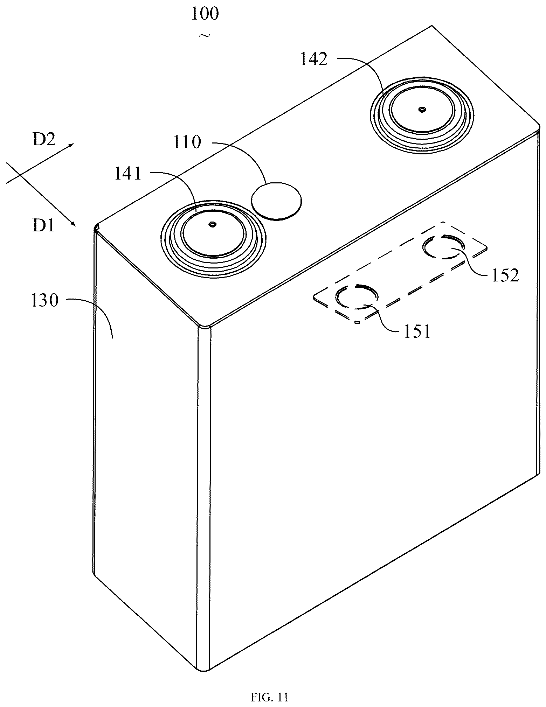

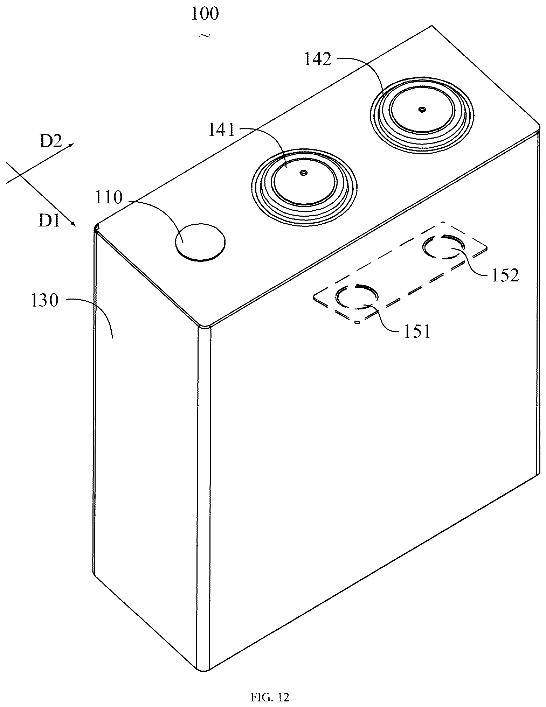

Refer to FIG. 11 and FIG. 12. FIG. 11 is a schematic structural diagram of a battery unit according to a first embodiment. FIG. 12 is a schematic structural diagram of a battery unit according to a second embodiment.

The battery unit 100 is a battery cell. The battery unit 100 further includes a sensor 151 and a processor 152. The sensor 151 is configured to acquire a parameter of the battery cell. The processor 152 generates specified data based on the parameter and/or controls the sensor 151 and/or the light communication module 110 based on the specified data. The sensor 151 may include, but is not limited to, a voltage sensor, a temperature sensor, a pressure sensor, or the like. A parameter of the battery unit 100 may be acquired by using the sensor 151. A position of the sensor 151 in the battery unit 100 includes but is not limited to: the sensor being completely built in the battery unit 100, the sensor 151 being partially located in the battery unit 100, the sensor 151 being disposed on an outer side of the battery unit 100, or the like. The processor 152 may be located inside the battery unit 100. After the sensor 151 acquires a parameter of the battery unit 100, the processor 152 may receive the parameter, and generate specified data based on the parameter. The processor 152 may further control the sensor 151 to operate based on the specified data, or control the light communication module 110 to operate based on the specified data, or control both the light communication module 110 and the sensor 151 to operate based on the specified data, or the like. Therefore, it is convenient to acquire parameters of the battery units 100 and/or manage the battery units 100 in a targeted manner.

Further, the battery unit 100 further includes a housing 130. The light communication module 110 is disposed on the housing 130. The housing 130 is provided with at least one pole. The at least one pole is disposed outside a line-of-sight transmission range of the light communication modules 110 of two adjacent battery units 100. For example, a sufficient spacing may be maintained between the light communication modules 110 and the poles, or the light communication modules 110 are disposed at particular positions, so that the poles are disposed outside line-of-sight transmission ranges of the light communication modules 110 of two adjacent battery units 100. When the light communication modules 110 of the two adjacent battery units 100 perform light communication, blocking when the poles communicate with the light communication modules 110 may be relieved. Further, the light communication modules 110 may be powered on by using at least one pole.

The at least one pole may include a first pole 141 and a second pole 142. One of the first pole 141 and the second pole 142 is a positive pole, and the other is a negative pole. The first pole 141 and the second pole 142 may be configured to output a current and connect to an external circuit.

Referring to FIG. 11, optionally, the first pole 141 and the second pole 142 are spaced along the second direction D2. The light communication module 110 is disposed between the first pole 141 and the second pole 142. The light communication module 110 may be disposed at a position closer to the first pole 141, or a position closer to the second pole 141, so that when a plurality of battery units 100 are arranged along the first direction D1, two adjacent light communication modules 110 can be displaced in the second direction D2. Therefore, cross-talk generated when the light communication modules 110 communicate with each other is relieved, and blocking when the first pole 141 and the second pole 142 communicate with the light communication modules 110 can be further relieved.

Referring to FIG. 12, optionally, the light communication module 110, the first pole 141, and the second pole 142 are sequentially spaced along the second direction D2. A spacing between the light communication module 110 and the first pole 141 allows the light communication modules 110 of two adjacent battery units 100 to perform light communication, without blocking signal light. In other embodiments, the light communication module 110, the second pole 142, and the first pole 141 are sequentially spaced along the second direction D2, or the light communication module 110, the second pole 142, and the first pole 141 may not be disposed along the second direction D2, but are randomly disposed on the housing, provided that the first pole 141 and the second pole 142 are disposed outside the line-of-sight transmission ranges of the light communication modules 110 of two adjacent battery units 100. Therefore, by properly arranging the positions of the light communication module 110, the first pole 141, and the second pole 142 in the housing 130, blocking by the first pole 141 and the second pole 142 when the light communication modules 110 communicate with each other can be relieved.

Further, the housing 130 may be divided into an end cover and a case. The end cover refers to a component that covers an opening of the case to isolate an internal environment of the battery unit 100 from an external environment. A shape of the end cover may be adapted to a shape of the case to fit the case. Optionally, the end cover may be made of a material with specified hardness and strength (for example, aluminum alloy). In this way, the end cover is less likely to deform under extrusion and collision, enabling the battery unit 100 to have a higher structural strength and enhanced safety performance.

In some embodiments, an insulator may further be disposed on an inner side of the end cover. The insulator may be configured to isolate electrical connection parts in the case from the end cover, reducing a risk of short circuit. For example, the insulator may be made of plastic or rubber. The case may be an assembly configured to form an internal environment of the battery unit 100 together with the end cover, where the formed internal environment may be configured to accommodate an electrode assembly, an electrolyte, and other components. The case and the end cover may be separate components. An opening may be provided in the case, and the end cover covers the opening to form the internal environment of the battery unit 100. The case may be of various shapes and sizes, such as a rectangular shape, a cylindrical shape, and a hexagonal prism shape. The case may be made of various materials, such as copper, iron, aluminum, stainless steel, aluminum alloy, and plastic, which are not particularly limited in the embodiments of the present application. The end cover may also be made of various materials, such as copper, iron, aluminum, stainless steel, aluminum alloy, and plastic, which are not particularly limited in the embodiments of the present application. In an embodiment, the light communication module 110, the processor 152, and the sensor 151 may be disposed on the end cover.

In some embodiments, the battery unit 100 is a square battery cell. The first direction D1 is a thickness direction of the square battery cell. The second direction D2 is a length direction of the square battery cell. Therefore, the plurality of battery units 100 can be easily arranged along the first direction D1 to form the battery group 10, thereby reducing difficulty in forming the battery system 1. In other embodiments, the battery unit 100 may alternatively be a cylindrical battery cell. The first direction D1 may be any radial direction of the cylindrical battery cell. The second direction D2 may be a direction perpendicular to both the cylindrical first direction D1 and an axial direction.

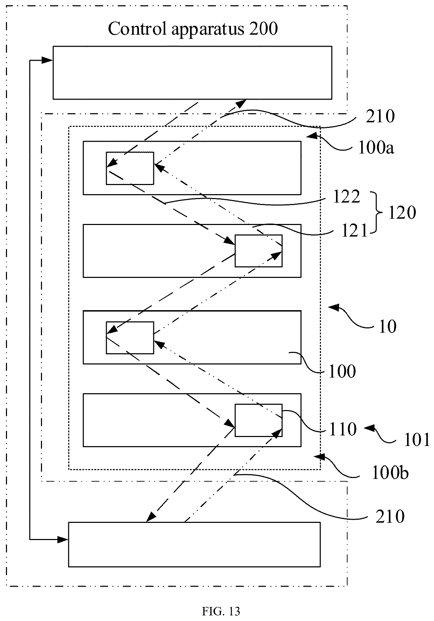

In the foregoing embodiment, a multi-hop channel using the battery units 100 as nodes is formed between the plurality of battery units 100 in the battery group 10. Further, the battery system 1 may communicate with the control apparatus. The control apparatus communicates with the battery group 10, so as to transmit specified data between the plurality of battery units 100 and the control apparatus. Refer to FIG. 13. FIG. 13 is a schematic structural top view of a battery system according to a fifth embodiment.

The plurality of battery units 100 are configured to form a first channel 120 that uses the battery units 100 as nodes and sequentially transmits specified data. The first channel 120 includes a first sub-channel 121 and a second sub-channel 122 that are opposite to each other. The battery units 100 at a first end 100a and a second end 100b of the battery group 10 can further respectively form second channels 210 for transmitting the specified data with the control apparatus 200. At least one of the battery group 10 and the control apparatus 200 is configured to selectively transmit the specified data through at least one of the first sub-channel 121 and the second sub-channel 122.

The control apparatus 200 may be a battery management system, a Battery Management Unit (BMU) of the battery management system, a central control platform of an automobile or an energy storage system, or the like. The control apparatus 200 may obtain an operating parameter of each battery unit 100 through the second channel 210 and generate a control signal according to the operating parameter, so as to transmit the control signal to the battery group 10 through the second channel 210, so that the battery unit 100 may operate according to the control signal.

The first end 100a may be an end at which a first battery unit 100 among the plurality of arranged battery units 100 is located. The second end 100b may be an end at which a last battery unit 100 among the plurality of arranged battery units 100 is located. It should be noted that the first end 100a and the second end 100b are relative concepts, and are not necessarily actual ends of the battery system.

The first channel 120 is configured to transmit the specified data, so that the plurality of battery units 100 may directly communicate with each other. It is convenient to acquire data of each battery unit 100, and/or to manage the battery units 100 in a targeted manner, thereby improving reliability of the battery system 1. The first channel 120 includes the first sub-channel 121 and the second sub-channel 122 that are opposite to each other, thereby improving flexibility of data transmission between the plurality of battery units 100 in a same battery group 10. Wired communication or wireless communication may be used between the plurality of battery units 100 and between the battery units 100 and the control apparatus 200. For example, a wired transmission manner may be used between the battery units 100, and a wireless transmission manner may be used between the battery units 100 and the control apparatus 200. Alternatively, a wireless transmission manner is used between the battery units 100, and a wired transmission manner is used between the battery units 100 and the control apparatus 200. Alternatively, a wired transmission manner or a wireless transmission manner may be used between the battery units 100 and between the battery units 100 and the control apparatus 200. The wireless communication may include Bluetooth communication, radio frequency communication, light communication, or the like.

In this embodiment, the control apparatus 200 communicates with the battery group 10 through the second channel 210, and the control apparatus 200 respectively communicates with the battery units 100 located at the first end 100a and the second end 100b of the battery group 10. Therefore, the control apparatus 200 may transmit the specified data from the battery unit 100 located at the first end 100a to the battery group 10, or transmit the specified data from the battery unit 100 located at the second end 100b to the battery group 10. The battery group 10 may also transmit the specified data from the battery unit 100 located at the first end 100a to the control apparatus 200, or transmit the specified data from the battery unit 100 located at the second end 100b to the control apparatus 200. Therefore, the battery units 100 perform cascaded communication through the first channel 120, the end battery units 100 of the battery group 10 respectively communicate with the control apparatus 200 through the second channels 210, and the battery group 10 and the control apparatus 200 may select the first sub-channel 121 and the second sub-channel 122 to transmit the specified data, thereby improving flexibility of data transmission between the battery group 10 and the control apparatus 200.

Specifically, a transmission direction of the first sub-channel 121 is from the second end 100b of the battery group 10 to the first end 100a of the battery group 10, and a transmission direction of the second sub-channel 122 is from the first end 100a to the second end 100b. When the control apparatus 200 transmits the specified data from the battery unit 100 located at the first end 100a to the battery group 10, the second sub-channel 122 needs to be selected to transmit the specified data. When the control apparatus 200 transmits the specified data from the battery unit 100 located at the second end 100b to the battery group 10, the first sub-channel 121 needs to be selected to transmit the specified data. Similarly, when the battery group 10 transmits the specified data from the first end 100a to the second end 100b, the second sub-channel 122 may be selected to transmit the specified data. When the battery group 10 transmits the specified data from the second end 100b to the first end 100a, the first sub-channel 121 may be selected to transmit the specified data. Therefore, the battery group 10 and the control apparatus 200 may select the first sub-channel 121 and the second sub-channel 122 to transmit the specified data, thereby improving the flexibility of data transmission between the battery group 10 and the control apparatus 200.

The specified data includes uplink data uploaded from the battery unit 100 to the control apparatus 200. The battery group 10 is configured to selectively upload the uplink data to the first sub-channel 121 and the second sub-channel 122. The uplink data may include voltage data, power data, current data, temperature data, pressure data, or the like of the battery unit 100. The battery unit 100 may acquire respective uplink data, and then upload the uplink data to the control apparatus 200. Therefore, the battery unit 100 may select the first sub-channel 121 or the second sub-channel 122 to upload the uplink data to the control apparatus 200, thereby increasing the flexibility of data transmission between the battery group 10 and the control apparatus 200.

Further, the battery unit 100 is configured to selectively upload, based on a principle of a minimum hop count to the control apparatus 200, uplink data generated by the battery unit to the first sub-channel 121 or the second sub-channel 122. The hop count may be understood as a number of nodes of a channel section through which data passes on a channel when the channel is used to transmit the data. It may be understood that, when the data is directly transmitted from one communication node to another communication node, the hop count passed may be defined as one hop. The principle of the minimum hop count may be understood as that when the uplink data of the battery unit 100 is uploaded to the control apparatus 200, the uplink data is transmitted by using a path corresponding to the minimum hop count. For example, in the top view shown in FIG. 13, the battery system 1 includes four battery units 100. The four battery units 100 are sequentially divided, from top to bottom, into a first battery unit 100, a second battery unit 100, a third battery unit 100, and a fourth battery unit 100. If the second battery unit 100 selects the first sub-channel 121 to transmit the uplink data, the uplink data may be uploaded to the control apparatus 200 by transferring via the first battery unit 100 for two hops. If the second sub-channel 122 is selected to transmit the uplink data, the uplink data needs to be uploaded to the control apparatus 200 by transferring via the third battery unit 100 and the fourth battery unit 100 for three hops. Therefore, the second battery unit 100 should select the first sub-channel 121 to upload the uplink data according to the principle of the minimum hop count. Similarly, the third battery unit 100 should select the second sub-channel 122 to upload the uplink data according to the principle of the minimum hop count. The fourth battery unit 100 should select the second sub-channel 122 to upload the uplink data according to the principle of the minimum hop count. Therefore, the hop count during data transmission can be reduced, and a data transmission load can be reduced.

Optionally, the uplink data includes a first type of uplink data and a second type of uplink data. The battery group 10 is configured to upload the first type of uplink data to one of the first sub-channel 121 and the second sub-channel 122, and upload the second type of uplink data to the other of the first sub-channel 121 and the second sub-channel 122. The first type of uplink data and the second type of uplink data may be set according to an actual situation. For example, the first type of uplink data may include voltage data, power data, current data, and the like of the battery unit 100. The second type of uplink data may include temperature data, pressure data, or the like. When the battery unit 100 needs to upload particular uplink data to the control apparatus 200, a type of the uplink data may be first detected. Then one of the first sub-channel 121 and the second sub-channel 122 is selected to upload data according to the detected type of the uplink data. Therefore, the uplink data is classified, and the first sub-channel 121 and the second sub-channel 122 are configured to transmit different types of uplink data, to properly share loads of the first sub-channel 121 and the second sub-channel 122, thereby improving data transmission efficiency and data transmission flexibility.

Further, an upload frequency of the first type of uplink data is greater than an upload frequency of the second type of uplink data. The specified data further includes downlink data issued to the specified battery unit 100 from the control apparatus 200. The control apparatus 200 is configured to issue the downlink data to a sub-channel for the second type of uplink data. The downlink data may include a control signal issued by the control apparatus 200 to the battery group 10, for example, including but not limited to a sampling control signal for controlling the battery unit 100 to acquire corresponding state data or another function control signal for controlling the battery unit 100 to perform an action such as balancing. For example, when the first type of uplink data is transmitted on the first sub-channel 121, the second type of uplink data is transmitted on the second sub-channel 122, and the upload frequency of the first type of uplink data is greater than the upload frequency of the second type of uplink data, the second sub-channel 122 is used to transmit downlink data. On the contrary, when the first type of uplink data is transmitted on the second sub-channel 122 and the second type of uplink data is transmitted on the first sub-channel 121, the first sub-channel 121 is used to transmit the downlink data. In other embodiments, the upload frequency of the second type of uplink data may alternatively be greater than the upload frequency of the first type of uplink data. Details are not described herein again. Therefore, channel multiplexing is performed on the downlink data and the uplink data with a relatively small upload frequency, to properly share loads of the first sub-channel 121 and the second sub-channel 122, thereby improving data transmission efficiency and data transmission flexibility.

In some embodiments, the battery group 10 is configured to upload the uplink data to one of the first sub-channel 121 and the second sub-channel 122, and upload, in response to a node in one of the first sub-channel 121 and the second sub-channel 122 being in a communication abnormal state, the uplink data to the other of the first sub-channel 121 and the second sub-channel 122. For example, it may be preset to upload the uplink data through the first sub-channel 121. In this case, when the first sub-channel 121 is in a communication abnormal state and the second sub-channel 122 is in a communication normal state, the uplink data may be selected to be uploaded to the control apparatus 200 through the second sub-channel 122. On the contrary, it may be preset to upload the uplink data through the second sub-channel 122. In this case, when the second sub-channel 122 is in a communication abnormal state and the first sub-channel 121 is in a communication normal state, the uplink data may be selected to be uploaded to the control apparatus 200 through the first sub-channel 121. Therefore, when a communication abnormality exists on a sub-channel in the battery group 10, transmission of the uplink data is not affected, thereby improving stability of communication between the battery units 100 and the control apparatus 200.

Further, the battery unit 100 located between the node in the communication abnormal state and the first end 100a transmits the uplink data through the first sub-channel 121, and the battery unit 100 located between the node in the communication abnormal state and the second end 100b transmits the uplink data through the second sub-channel 122. For example, in the top view shown in FIG. 13, the battery system 1 includes four battery units 100. The four battery units 100 are sequentially divided, from top to bottom, into a first battery unit 100, a second battery unit 100, a third battery unit 100, and a fourth battery unit 100. If the third battery unit 100 is the node in the communication abnormal state, the first battery unit 100 and the second battery unit 100 transmit the uplink data through the first sub-channel 121, and the fourth battery unit 100 transmits the uplink data through the second sub-channel 122. Therefore, the stability of communication between the battery units 100 and the control apparatus 200 is improved, a hop count of data transmission is reduced, and a data transmission load is reduced.

In some embodiments, the specified data includes downlink data issued to the battery unit 100 from the control apparatus 200, and the control apparatus 200 is configured to selectively issue the downlink data to the first sub-channel 121 and the second sub-channel 122. The downlink data may include a control signal issued by the control apparatus 200 to the battery group 10, for example, including but not limited to a sampling control signal for controlling the battery unit 100 to acquire state data or another function control signal for controlling the battery unit 100 to perform an action such as balancing. The control apparatus 200 may generate a control signal as the downlink data, and then select the first sub-channel 121 or the second sub-channel 122 to issue the downlink data to the control apparatus 200. Therefore, the control apparatus 200 may select the first sub-channel 121 or the second sub-channel 122 to issue the downlink data to the battery unit 100, thereby increasing the flexibility of data transmission between the battery group 10 and the control apparatus 200.

Further, the control apparatus 200 is configured to issue the downlink data to one of the first sub-channel 121 and the second sub-channel 122, and issue, in response to a node in one of the first sub-channel 121 and the second sub-channel 122 being in a communication abnormal state, the downlink data to the other of the first sub-channel 121 and the second sub-channel 122. For example, it may be preset to issue the downlink data through the first sub-channel 121. When the first sub-channel 121 is in a communication abnormal state and the second sub-channel 122 is in a communication normal state, the downlink data may be selected to be issued to each battery unit 100 through the second sub-channel 122. On the contrary, it may be preset to issue the downlink data through the second sub-channel 122. When the second sub-channel 122 is in a communication abnormal state and the first sub-channel 121 is in a communication normal state, the downlink data may be selected to be issued to each battery unit 100 through the first sub-channel 121. Therefore, when a communication abnormality exists on a sub-channel in the battery group 10, transmission of the downlink data is not affected, thereby improving stability of communication between the battery units 100 and the control apparatus 200.

Further, the battery unit 100 located between the node in the communication abnormal state and the first end 100a receives the downlink data from the control apparatus 200 through the second sub-channel 122. The battery unit 100 located between the node in the communication abnormal state and the second end 100b receives the downlink data from the control apparatus 200 through the first sub-channel 121. For example, an example in which four battery units 100 receive downlink is used in FIG. 13. The four battery units 100 are sequentially divided, from top to bottom, into a first battery unit 100, a second battery unit 100, a third battery unit 100, and a fourth battery unit 100. If the third battery unit 100 is the node in the communication abnormal state, the first battery unit 100 and the second battery unit 100 receive the downlink data through the second sub-channel 122, and the fourth battery unit 100 receives the downlink data through the first sub-channel 121. Therefore, the stability of communication between the battery units 100 and the control apparatus 200 is improved, a hop count of data transmission is reduced, and a data transmission load is reduced.

In some embodiments, the specified data includes local downlink data issued from the control apparatus 200 to a specified battery unit 100. The control apparatus 200 is configured to selectively issue the local downlink data to the first sub-channel 121 or the second sub-channel 122 based on a principle of a minimum hop count to the specified battery unit 100. The local downlink data is data that only needs to be sent to a particular battery unit 100. For example, an operating state of each battery unit 100 is obtained by analyzing the uplink data, and then a particular control signal is generated according to the operating state of each battery unit 100. The local downlink data includes, but is not limited to, power balancing data. The hop count may be understood as a number of nodes of a channel section through which data passes on a channel when the channel is used to transmit the data. It may be understood that, when the data is directly transmitted from one communication node to another communication node, the hop count passed may be defined as one hop. The principle of the minimum hop count may be understood as that when the downlink data of the control apparatus 200 is issued to the particular battery unit 100, the downlink data is transmitted by using a path corresponding to the minimum hop count. For example, an example in which four battery units 100 upload uplink data is used in FIG. 13. The four battery units 100 are sequentially divided, from top to bottom, into a first battery unit 100, a second battery unit 100, a third battery unit 100, and a fourth battery unit 100. When the local downlink data needs to be issued to the third battery unit 100, if the first sub-channel 121 is selected to issue the downlink data, the downlink data is issued to the third battery unit 100 by transferring via the fourth battery unit 100 for one hop. If the second sub-channel 122 is selected to issue the downlink data, the downlink data can be issued to the third battery unit 100 by transferring via the first battery unit 100 and the second battery unit 100 for two hops. Therefore, the third battery unit 100 should select the first sub-channel 121 to issue the downlink data according to the principle of the minimum hop count. Similarly, the second battery unit 100 should select the second sub-channel 122 to receive according to the principle of the minimum hop count. Therefore, the hop count during data transmission can be reduced, and a data transmission load can be reduced.

In some embodiments, the specified data includes global downlink data issued from the control apparatus 200 to the plurality of battery units 100. The control apparatus 200 is configured to respectively issue the global downlink data to the first sub-channel 121 and the second sub-channel 122. The global downlink data may be a control signal for controlling all the battery units 100, for example, may include but is not limited to a sampling control signal for acquiring state data of the battery units 100. To transmit the global downlink data to the battery units 100 more quickly, the downlink data may be issued through the first sub-channel 121 and the second sub-channel 122 at the same time. For example, an example in which four battery units 100 upload uplink data is used in FIG. 13. The four battery units 100 are sequentially divided, from top to bottom, into a first battery unit 100, a second battery unit 100, a third battery unit 100, and a fourth battery unit 100. The downlink data may be issued to the third battery unit 100 and the fourth battery unit 100 through the first sub-channel 121, and meanwhile, the downlink data is issued to the first battery power supply and the second battery unit 100 through the second sub-channel 122. Therefore, a time delay of the global downlink data can be reduced, and the transmission efficiency of the downlink data can be improved.

In some embodiments, the battery group 10 is configured to use one of the first sub-channel 121 and the second sub-channel 122 as a main channel to transmit the specified data, and use the other of the first sub-channel 121 and the second sub-channel 122 as a standby channel to transmit the specified data. The battery group 10 is configured to switch the main channel and the standby channel with time. The main channel and the standby channel may be set according to an actual situation. For example, the first sub-channel 121 may be selected as the main channel, and the second sub-channel 122 may be selected as the standby channel. Alternatively, the second sub-channel 122 is selected as the main channel, and the first sub-channel 121 is selected as the standby channel. The main channel and the standby channel may respectively have different operating time periods. A first operating duration of the main channel may be greater than a second operating duration of the standby channel. When the operating duration of the main channel satisfies the first operating duration, the battery group 10 starts to use the standby channel for operation. For example, when the operating duration of the main channel is two hours and the operating duration of the standby channel is one hour, the battery group 10 is switched to use the standby channel for operation after the main channel continuously operates for two hours, and is switched to use the main channel for operation again after the standby channel operates for one hour. Therefore, the first sub-channel 121 and the second sub-channel 122 may operate in turn, to reduce a load of a single sub-channel, thereby further improving the flexibility and stability of data transmission.

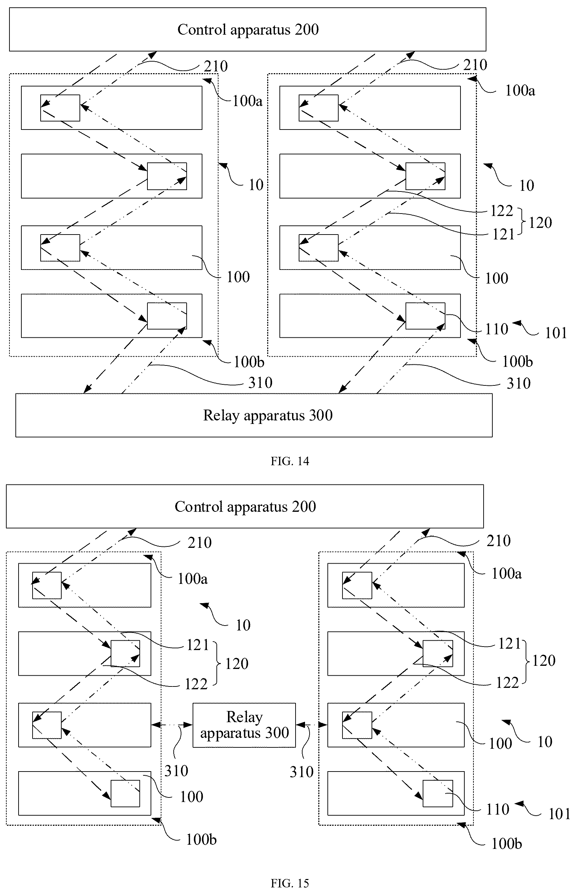

The foregoing embodiment mainly describes a data transmission manner between the battery units 100 in a single battery group 10. In other embodiments, data transmission may alternatively be performed between a plurality of battery groups 10. Refer to FIG. 14. FIG. 14 is a schematic structural top view of a battery system according to a sixth embodiment.

The battery system 1 includes at least two battery groups 10 and a relay apparatus 300. The plurality of battery units 100 in each battery group 10 are configured to form a first channel 120 that uses the battery units 100 as nodes and sequentially transmits specified data. The at least two battery groups 10 are capable of respectively forming, with the control apparatus 200, second channels 210 for transmitting the specified data. A quantity of the battery groups 10 includes, but is not limited to, two, three, four, or the like. Each battery group 10 includes, but is not limited to, the battery group 10 in any of the foregoing embodiments. A data transmission manner between each battery group 10 and the control apparatus 200 may include, but is not limited to, a manner in any of the foregoing embodiments. Details are not described herein again.

The relay apparatus 300 is configured to respectively form, with the at least two battery groups 10, third channels 310 for transmitting the specified data. The relay apparatus 300 is further configured to forward the specified data between the battery groups 10. The relay apparatus 300 is communicatively connected to the battery unit 100, thereby enabling data transmission between the battery group 10 and the relay apparatus 300. The relay apparatus 300 may be in wired communication or wireless communication with the plurality of battery units 100. The wireless communication may include Bluetooth communication, radio frequency communication, light communication, or the like. Compared with the wired communication manner, the wireless communication manner may relieve a problem of complex routing of the battery system 1 caused by a large number of connection harnesses disposed between the battery units 100 and the relay apparatus 300. The relay apparatus 300 communicates with the battery groups 10 through the third channel 310, and forwards the specified data between the battery groups 10, so that the flexibility of data transmission between the battery units 100 and between the battery units 100 and the control apparatus 200 can be improved.

In some embodiments, at least a part of the battery units 100 in the battery group 10 and the control apparatus 200 are configured to selectively transmit the specified data through the first channel 120 in the group of the battery units 100, or transmit the specified data through the relay apparatus 300 and the first channel 120 of the another battery group 10. Each battery group 10 has a first channel 120. Each battery unit 100 in a single battery group 10 may transmit specified data to the control apparatus 200 through the first channel 120. In this embodiment, the battery unit 100 may further transmit the specified data to the control apparatus 200 through the relay apparatus 300 and the first channel 120 of the another battery group 10. For example, in the top view shown in FIG. 14, the battery system 1 includes two battery groups 10. The two battery groups 10 are sequentially a first battery group 10 and a second battery group 10 from left to right. Four battery units 100 in each battery group 10 are sequentially divided, from top to bottom, into a first battery unit 100, a second battery unit 100, a third battery unit 100, and a fourth battery unit 100. If at least a part of the battery units 100 are the third battery unit 100 and the fourth battery unit 100 in the first battery group 10, the third battery unit 100 and the fourth battery unit 100 in the first battery group 10 may selectively transmit from the first channel 120 of the first battery group 10 to the control apparatus 200, or may first transmit to the relay apparatus 300 through the first channel 120, forward to the second battery group 10 through the relay apparatus 300, and transmit to the control apparatus 200 through the first channel 120 of the second battery group 10. Therefore, at least two data transmission paths may be provided between at least a part of battery units 100 and the control apparatus 200, thereby reducing a communication failure rate.

It should be noted that, the group of the battery unit 100 generally refers to a group in which a battery unit 100 is located. For example, in the top view shown in FIG. 14, when the selected battery unit 100 is a battery unit 100 of the first battery group 10, the group of the selected battery unit 100 is the first battery group 10. When the selected battery unit 100 is a battery unit 100 of the second battery group 10, the group of the selected battery unit 100 is the second battery group 10.

Further, the plurality of battery units 100 include end battery units 100 located at two ends of the battery group 10 and a middle battery unit 100 located between the end battery units 100. The first channel 120 includes a first sub-channel 121 and a second sub-channel 122 that are opposite to each other. The control apparatus 200 is configured to be respectively connected to the end battery units 100 located at first ends 100a of the at least two battery groups 10 through the second channel 210. The relay apparatus 300 is configured to be respectively connected to the end battery units 100 located at second ends 100b of the at least two battery groups 10 through the third channel 310. Two ends of the battery group 10 may be two ends of the first channel 120, or may be ends of the battery group 10 connected to another part. The control apparatus 200 and the relay apparatus 300 are respectively communicatively connected to the two ends of the battery group 10, so that the specified data issued by the control apparatus 200 may be transmitted to each battery unit 100 through the first sub-channel 121 or the second sub-channel 122. Similarly, the relay apparatus 300 can also receive, through the third channel 310, the specified data transmitted by each battery unit 100. Therefore, the control apparatus 200 and the relay apparatus 300 are configured to be respectively communicatively connected to the end battery units 100, thereby simplifying a communication architecture and improving the flexibility of data transmission between the battery units 100 and between the battery units 100 and the control apparatus 200.

A transmission direction of the first sub-channel 121 is from the second end 100b to the first end 100a, and a transmission direction of the second sub-channel 122 is from the first end 100a to the second end 100b. The first end 100a may be an end at which a first battery unit 100 among the plurality of arranged battery units 100 is located. The second end 100b may be an end at which a last battery unit 100 among the plurality of arranged battery units 100 is located. The transmission direction of the first sub-channel 121 is transmission from an end of the battery group 10 close to the relay apparatus 300 to an end of the battery group 10 close to the control apparatus 200. The transmission direction of the second sub-channel 122 is transmission from the end of the battery group 10 close to the control apparatus 200 to the end close to the relay apparatus 300.

In some embodiments, the specified data includes uplink data uploaded from the battery unit 100 to the control apparatus 200. The middle battery unit 100 is configured to selectively send the uplink data to the control apparatus 200 through the first sub-channel 121 in the group of the middle battery unit 100, or send the uplink data to the control apparatus 200 through the second sub-channel 122 in the group of the middle battery unit 100, the relay apparatus 300, and the first sub-channel 121 of the another battery group 10. The middle battery unit 100 may send the uplink data to the control apparatus 200 through the first sub-channel 121 in the group, thereby reducing a hop count of data transmission. Alternatively, the uplink data is issued to the relay apparatus 300 through the second sub-channel 122 in the group and is forwarded to the another battery group 10 by the relay apparatus 300. The first sub-channel 121 of the another battery group 10 uploads the uplink data to the control apparatus 200. Therefore, the middle battery unit 100 may select different transmission paths to communicate with the control apparatus 200, thereby improving the flexibility of data transmission between the battery units 100 and the control apparatus 200.

Further, the middle battery unit 100 is configured to send, in response to all nodes in the first sub-channel 121 in the group of the middle battery unit 100 being in a normal communication state, the uplink data to the control apparatus 200 through the first sub-channel 121 in the group of the middle battery unit 100. When the nodes of all the first sub-channels 121 in the battery group 10 are in a normal communication state, the first sub-channel 121 in the group is preferentially used to transmit the uplink data, thereby reducing a hop count of data transmission, and reducing a load of the another battery group 10 during data transmission.

Optionally, the middle battery unit 100 is configured to send, in response to a downstream node in the first sub-channel 121 in the group of the middle battery unit 100 being in a normal communication state, the uplink data to the control apparatus 200 through the first sub-channel 121 in the group of the middle battery unit 100. The downstream node represents a node in a remaining transmission path of a battery unit 100 when transmitting uplink data. For example, in the top view shown in FIG. 14, the first battery group 10 is used as an example. If the uplink data of the third battery unit 100 needs to be transmitted through the first sub-channel 121, it only needs to be considered whether the first sub-channel 121 formed between the third battery unit 100, the second battery unit 100, and the first battery unit 100 is in a normal communication state. If yes, the uplink data is sent to the control apparatus 200 through the first sub-channel 121 of the first battery group 10, so that the first sub-channel 121 in the group is preferentially used to transmit the uplink data, thereby reducing a hop count of data transmission, and reducing a load of the another battery group 10 during data transmission.

In some embodiments, the middle battery unit 100 is configured to send, in response to a node in the first sub-channel 121 in the group of the middle battery unit 100 being in an abnormal communication state, the uplink data to the control apparatus 200 through the second sub-channel 122 in the group of the middle battery unit 100, the relay apparatus 300, and the first sub-channel 121 of the another battery group 10.

In an application scenario, all middle battery units 100 of a battery group 10 may send uplink data to the control apparatus 200 through the first sub-channel 121 of another battery group 10. For example, in the top view shown in FIG. 14, the first battery group 10 is used as an example. If an abnormality of the first battery unit 100 causes the first sub-channel 121 of the first battery group 10 to be in an abnormal state, the middle battery unit 100 cannot transmit the uplink data to the control apparatus 200 through the first sub-channel 121 of the first battery group 10, and may select to first transmit the uplink data to the relay apparatus 300 through the second sub-channel 122 of the first battery group 10, forward the uplink data to the second battery group 10 through the relay apparatus 300, and transmit the uplink data to the control apparatus 200 through the first sub-channel 121 of the second battery group 10. Therefore, when a communication abnormality exists on the first sub-channel 121 in the group, transmission of the uplink data is not affected, thereby improving stability of communication between the battery units 100 and the control apparatus 200.

In another application scenario, a part of middle battery units 100 in a battery group 10 may upload uplink data to the control apparatus 200 through the first sub-channel 121, and the remaining battery units 100 send the uplink data to the control apparatus 200 through the first sub-channel 121 of another battery group 10.

Specifically, the middle battery unit 100 located between the node in the abnormal communication state and the first end 100a transmits the uplink data through the first sub-channel 121 in the group of the middle battery unit 100, and the middle battery unit 100 located between the node in the abnormal communication state and the second end 100b sends the uplink data to the control apparatus 200 through the second sub-channel 122 in the group of the middle battery unit 100, the relay apparatus 300, and the first sub-channel 121 of the another battery group 10. For example, in the top view shown in FIG. 14, the first battery group 10 is used as an example. If an abnormality of the third battery unit 100 causes the first sub-channel 121 of the first battery group 10 to be in an abnormal state, the fourth battery unit 100 cannot transmit the uplink data to the control apparatus 200 through the first sub-channel 121 of the first battery group 10, and may select to first transmit the uplink data to the relay apparatus 300 through the second sub-channel 122 of the first battery group 10, forward the uplink data to the second battery group 10 through the relay apparatus 300, and transmit the uplink data to the control apparatus 200 through the first sub-channel 121 of the second battery group 10. The second battery unit 100 still uses the first sub-channel 121 of the first battery group 10 to transmit the uplink data to the control apparatus 200. Therefore, differential transmission is performed according to the positions of the battery units 100 relative to the node in abnormal communication. For a battery unit 100 capable of communicating with the control apparatus 200 through the first sub-channel 121 in the group of the battery unit, the first sub-channel 121 in the group is preferentially used to transmit the uplink data. For a battery unit 100 incapable of communicating with the control apparatus 200 through the first sub-channel 121 in the group of the battery unit, uplink data is transmitted to the control apparatus 200 through the first sub-channel 121 of another group. While the stability of communication between the battery units 100 and the control apparatus 200 is improved, the hop count of data transmission is reduced, and the load of the another battery group 10 during data transmission is reduced.

In some embodiments, the specified data includes downlink data issued by the control apparatus 200 to the battery unit 100. The middle battery unit 100 is configured to selectively receive the downlink data from the control apparatus 200 through the second sub-channel 122 in the group of the middle battery unit 100, or receive the downlink data from the control apparatus 200 through the second sub-channel 122 of another battery group 10, the relay apparatus 300, and the first sub-channel 121 in the group of the middle battery unit 100. The downlink data may include a control signal issued to the battery group 10 by the control apparatus 200. The control apparatus 200 may generate the control signal as the downlink data, and then select the second sub-channel 122 of the battery group 10 to transmit the downlink data to the battery unit 100 in each battery group 10. Alternatively, the second sub-channel 122 of another battery group 10, the relay apparatus 300, and the first sub-channel 121 are selected to transmit the downlink data to each battery unit 100. Therefore, the middle battery unit 100 may select different transmission paths to communicate with the control apparatus 200, thereby improving the flexibility of data transmission between the battery group 10 and the control apparatus 200.

Further, the middle battery unit 100 is configured to receive, in response to all nodes in the second sub-channel 122 in the group of the middle battery unit 100 being in a normal communication state, the downlink data from the control apparatus 200 through the second sub-channel 122 in the group of the middle battery unit 100. Therefore, the second sub-channel 122 in the group is preferentially used to receive the downlink data, thereby reducing a hop count of data transmission, and reducing a load of the another battery group 10 during data transmission.

Optionally, the middle battery unit 100 is configured to receive, in response to a downstream node in the second sub-channel 122 in the group of the middle battery unit 100 being in a normal communication state, the downlink data from the control apparatus 200 through the second sub-channel 122 in the group of the middle battery unit 100. The upstream node represents a node in a transmission path of a battery unit 100 when receiving downlink data. For example, in the top view shown in FIG. 14, the first battery group 10 is used as an example. If the control apparatus 200 needs to transmit the downlink data to the third battery unit 100 through the second sub-channel 122, it only needs to be considered whether the second sub-channel 122 formed between the third battery unit 100, the second battery unit 100, and the first battery unit 100 is in a normal communication state. If yes, the downlink data sent by the control apparatus 200 is received through the second sub-channel 122 of the first battery group 10. Therefore, the second sub-channel 122 in the group is preferentially used to receive the downlink data, thereby reducing a hop count of data transmission, and reducing a load of the another battery group 10 during data transmission.

Further, the middle battery unit 100 is configured to receive, in response to all nodes in the second sub-channel 122 in the group of the middle battery unit 100 being in a normal communication state, the downlink data from the control apparatus 200 through the second sub-channel 122 of the another battery group 10, the relay apparatus 300, and the first sub-channel 121 in the group of the middle battery unit 100.

In an application scenario, all middle battery units 100 of a battery group 10 may receive downlink data sent by the control apparatus 200 through the second sub-channel 122 of another battery group 10. For example, in the top view shown in FIG. 14, the first battery group 10 is used as an example. If an abnormality of the second battery unit 100 causes the second sub-channel 122 of the first battery group 10 to be in an abnormal state, the third battery unit 100 cannot receive the downlink data through the second sub-channel 122 of the first battery group 10, and may select to receive the downlink data through the second sub-channel 122 of the second battery group 10, transmit the downlink data to the relay apparatus 300, forward the downlink data to the first battery group 10 through the relay apparatus 300, and then transmit the downlink data to the fourth battery unit 100 and the third battery unit 100 through the first sub-channel 121 of the first battery group 10. Therefore, when a communication abnormality exists on the second sub-channel 122 in the group, transmission of the downlink data is not affected, thereby improving stability of communication between the battery units 100 and the control apparatus 200.

In another application scenario, a part of middle battery units 100 in a battery group 10 may receive downlink data sent by the control apparatus 200 through the second sub-channel 122, and the remaining battery units 100 receive the downlink data sent by the control apparatus 200 through the second sub-channel 122 of another battery group 10, the relay apparatus 300, and the first sub-channel 121.

Specifically, the middle battery unit 100 located between the node in the abnormal communication state and the first end 100a receives the downlink data from the control apparatus 200 through the second sub-channel 122 in the group of the middle battery unit 100, and the middle battery unit 100 located between the node in the abnormal communication state and the second end 100b receives the downlink data from the control apparatus 200 through the second sub-channel 122 of the another battery group 10, the relay apparatus 300, and the first sub-channel 121 in the group of the middle battery unit 100. For example, in the top view shown in FIG. 14, the first battery group 10 is used as an example. If an abnormality of the third battery unit 100 causes the second sub-channel 122 of the first battery group 10 to be in an abnormal state, the fourth battery unit 100 cannot receive the downlink data through the second sub-channel 122 of the first battery group 10, and may select to transmit the downlink data to the relay apparatus 300 through the second sub-channel 122 of the second battery group 10, forward the downlink data to the first battery group 10 through the relay apparatus 300, and transmit the downlink data to the fourth battery unit 100 through the first sub-channel 121 of the first battery group 10. The second battery unit 100 still uses the second sub-channel 122 of the first battery group 10 to receive the downlink data. Therefore, differential transmission is performed according to the positions of the battery units 100 relative to the node in abnormal communication. For a battery unit 100 capable of communicating with the control apparatus 200 through the second sub-channel122 in the group of the battery unit, the second sub-channel 122 in the group is preferentially used to receive the downlink data. For a battery unit 100 capable/incapable of communicating with the control apparatus 200 through the second sub-channel 122 in the group, the downlink data may be received through the second sub-channel 122 of another group and the relay apparatus 300. While the stability of communication between the battery units 100 and the control apparatus 200 is improved, the hop count of data transmission is reduced, and the load of the another battery group 10 during data transmission is reduced.

In the foregoing embodiment, the relay apparatus 300 directly communicates with the end battery units 100 of the battery group 10. In other embodiments, the relay apparatus 300 may alternatively directly communicate with the middle battery unit 100 of the battery group 10. As shown in FIG. 15, FIG. 15 is a schematic structural top view of a battery system according to a seventh embodiment.

The plurality of battery units 100 include end battery units 100 located at two ends of the battery group 10 and a middle battery unit 100 located between the end battery units 100. The control apparatus 200 is configured to be respectively connected to the end battery units 100 at first ends 100a and/or second ends 100b of the at least two battery groups 10 through the second channel 210. The relay apparatus 300 is configured to be respectively connected to the middle battery units 100 of the at least two battery groups 10 through the third channel 310. A control unit may be communicatively connected to the battery unit 100 located at the first end 100a of the battery group 10, or communicatively connected to the battery unit 100 located at the second end 100b of the battery group 10, or communicatively connected to both the battery unit 100 located at the first end 100a of the battery group 10 and the battery unit 100 located at the second end 100b of the battery group 10. The relay apparatus 300 may be located between two battery groups 10, and is simultaneously connected to the battery units 100 of the two battery groups 10 through the third channel 310. For example, in the top view shown in FIG. 15, the battery system 1 includes two battery groups 10 and a relay apparatus 300. The relay apparatus 300 is respectively connected to a third battery unit 100 in a first battery group 10 and a third battery unit 100 in a second battery group 10 through a third channel 310. In other embodiments, the relay apparatus 300 may further be connected to battery units 100 in different battery groups 10 in different arrangement sequences through the third channel 310. For example, the relay apparatus 300 is respectively connected to the third battery unit 100 in the first battery group 10 and a second battery unit 100 in the second battery group 10 through the third channel 310. In some embodiments, there may be a plurality of relay apparatuses 300. For example, one relay apparatus 300 is connected between battery units 100 that are in a same arrangement sequence between two battery groups 10. In some embodiments, there may be a plurality of battery groups 10. One or more relay apparatuses 300 may be connected between every two battery groups 10. Therefore, the control apparatus 200 is communicatively connected to the end battery units 100, and the relay apparatus 300 is configured to be communicatively connected to the middle battery unit 100, thereby simplifying a communication architecture and further improving the flexibility of data transmission between the battery units 100 and between the battery units 100 and the control apparatus 200.

In this embodiment, the first channel 120 may include a first sub-channel 121 and a second sub-channel 122 that are opposite to each other. Specific implementations of the first sub-channel 121 and the second sub-channel 122 are similar to those of the first sub-channel 121 and the second sub-channel 122 in the foregoing embodiment. Details are not described herein again.

In some embodiments provided in the present application, detection of a communication state of the battery unit 100 may be further included. The detection manner may be applied to the battery system 1 according to any of the foregoing embodiments.

The battery unit 100 is further configured to detect a communication state of adjacent channel nodes. The adjacent channel nodes may be a nearest upstream channel node and a nearest downstream channel node of a current battery unit 100. It should be noted that when the battery unit 100 is used as a channel node to form a channel, detection of a communication state of a channel node may be detection of a communication state of a battery unit 100 corresponding to the channel node. Therefore, a communication state of an adjacent node is detected by using the battery unit 100, so that real-time performance of communication state detection can be improved, to facilitate feedback of a data transmission policy in a targeted manner.

Further, the battery unit 100 is configured to generate, in response to not receiving the specified data from an upstream node within a first predetermined time, a communication abnormal indication for the upstream node. The first predetermined time may be set according to an actual situation. For example, the first predetermined time may be set according to a data upload frequency. The first predetermined time may be one to two times the upload frequency. Corresponding to different uploaded data, the upload frequencies may be different. For example, when the uploaded data is a voltage, the upload frequency may be 50 milliseconds to 150 milliseconds. When the uploaded data is a temperature, the upload frequency may be 900 milliseconds to 1100 milliseconds. In a normal state, when data is transmitted between the battery units 100, a previous battery unit 100 may send specified data to a subsequent battery unit 100. If the subsequent battery unit 100 does not receive the specified data sent by the previous battery unit 100 within the first predetermined time, it may be determined that the previous battery unit 100 is in a communication abnormal state. Therefore, whether communication of the upstream nodes is abnormal is determined according to whether the specified data is received within the first predetermined time, so that real-time performance of communication state detection can be further improved, to facilitate feedback of a data transmission policy in a targeted manner.

Optionally, the battery unit 100 is configured to generate, in response to not receiving a reception feedback from a downstream node within a second predetermined time after sending the specified data to the downstream node, a communication abnormal indication for the downstream node. A setting manner of the second predetermined time may be similar to a setting manner of the first predetermined time. Details are not described herein again. In a normal state, when data is transmitted between the battery units 100, a previous battery unit 100 may send specified data to a subsequent battery unit 100. After receiving the specified data, the subsequent battery unit 100 may send a feedback signal to the previous battery unit 100. If the previous battery unit 100 does not receive a feedback from the subsequent battery unit 100 within the second predetermined time, it may be determined that the subsequent battery unit 100 is in a communication abnormal state. Therefore, whether communication of the downstream nodes is abnormal is determined according to whether the feedback is received within the second predetermined time, so that real-time performance of communication state detection can be further improved, to facilitate feedback of a data transmission policy in a targeted manner.

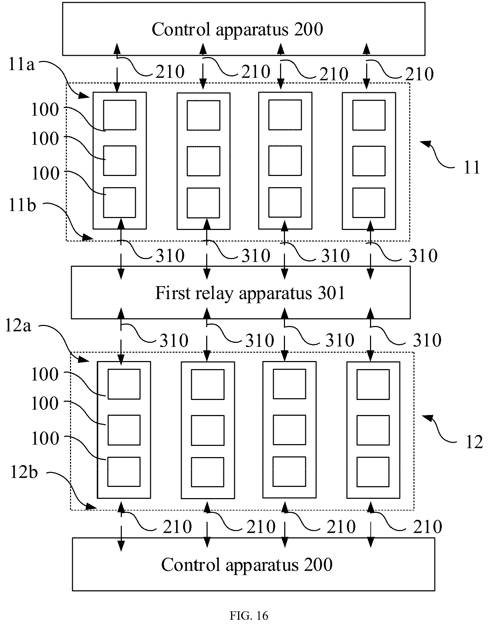

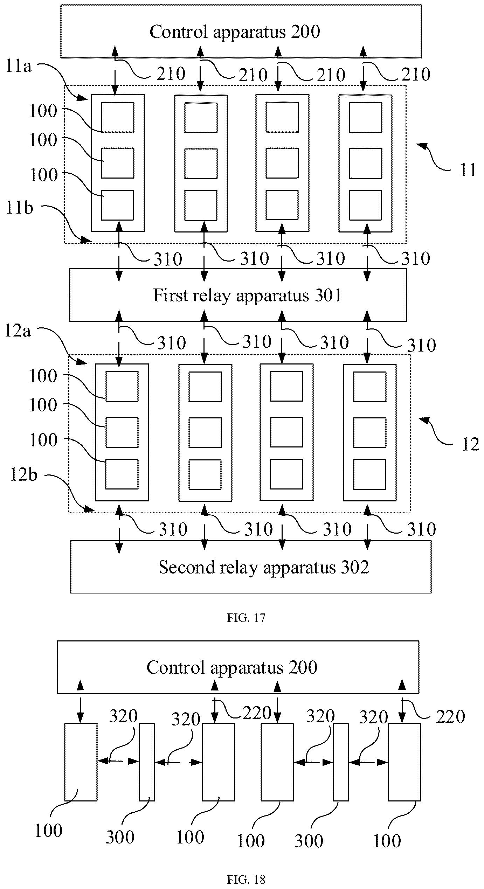

In some embodiments provided in the present application, the relay apparatus 300 may simultaneously communicate with battery groups at different positions. Refer to FIG. 16 and FIG. 17. FIG. 16 is a schematic structural top view of a battery system according to an eighth embodiment. FIG. 17 is a schematic structural top view of a battery system according to a ninth embodiment.

The plurality of battery units 100 include end battery units 100 located at two ends of the battery group 10 and a middle battery unit 100 located between the end battery units 100. The end battery units 100 are battery units 100 located at two ends in the arrangement direction of the plurality of battery units 100 in the battery group 10. Correspondingly, the middle battery unit 100 is a battery unit 100 located in the middle in the arrangement direction of the plurality of battery units 100 in the battery group 10.

The at least two battery groups 10 include a first battery group 11 and a second battery group 12. The relay apparatus 300 includes a first relay apparatus 301. The first battery group 11 and the second battery group 12 are respectively disposed on two sides of the first relay apparatus 301. The first relay apparatus 301 is connected to an end battery unit 100 at a second end 11b in the first battery group 11 through the third channel 310 and is connected to an end battery unit 100 at a first end 12a in the second battery group 12 through the third channel 310.

In this embodiment, a quantity of the battery groups 10 may be two, three, or the like. Each battery group 10 may be the battery group 10 in any of the foregoing embodiments. Details are not described herein again. All the battery groups 10 may be divided into a plurality of parts, for example, may be divided into two parts, which are respectively a first battery group 11 and a second battery group 12. In other embodiments, the battery groups may be divided into three parts, four parts, or the like. For example, referring to FIG. 16 and FIG. 17, a total quantity of battery groups 10 is eight. The eight battery groups 10 are divided into a first battery group 11 and a second battery group 12. Each battery group includes four battery groups 10. The first relay apparatus 301 is located between the first battery group 11 and the second battery group 12, so that the first relay apparatus 301 facilitates communication with battery units 100 in different battery groups in each battery group.

It should be noted that the first end 11a and the second end 11b in the first battery group 11 and the first end 12a and the second end 12b in the second battery group 12 are relative concepts, and are not necessarily actual ends. As shown in FIG. 16 and FIG. 17, an end at which the first battery group 11 is located close to the control apparatus 200 is defined as the first end 11a, an end at which the first battery group 11 is located close to the first relay apparatus 301 is defined as the second end 11b, an end at which the second battery group 12 is located close to the first relay apparatus 301 is defined as the first end 12a, and an end at which the second battery group 12 is located far away from the first relay apparatus 301 is defined as the second end 12b.

In this embodiment, the first relay apparatus 301 is connected to the end battery unit 100 at the second end 11a in the first battery group 11 through the third channel 310, and is connected to the end battery unit 100 at the first end 12a in the second battery group 12 through the third channel 310. Data forwarding between the plurality of battery groups 10 by using the first relay apparatus 301 can be facilitated, thereby improving flexibility of data transmission between the battery units 100 and between the battery units 100 and the control apparatus 200 while simplifying a communication architecture of the battery system 1 and properly deploying an arrangement manner of the battery groups 10.

Further, referring to FIG. 16, the control apparatus 200 is configured to be respectively connected to the end battery unit 100 at the first end 11a in the first battery group 11 and the end battery unit 100 at the second end 12a in the second battery group 12 through the second channel 210. In some embodiments, there are two control apparatuses 200. One control apparatus 200 is located at the first end 11a in the first battery group 11, so as to communicate with the end battery unit 100 at the first end 11a in the first battery group 11 through the second channel 210. The other control apparatus 200 is located at the second end 12a in the second battery group 12, so as to communicate with the end battery unit 100 at the second end 12a in the second battery group 12 through the second channel 210. In some other embodiments, there may alternatively be one control apparatus 200, which is respectively connected to the end battery unit 100 at the first end 11a in the first battery group 11 and the end battery unit 100 at the second end 12a in the second battery group 12 in a manner shown in FIG. 13. Details are not described herein again. Therefore, the flexibility of data transmission between the battery units 100 and between the battery units 100 and the control apparatus 200 can be improved while a communication architecture of the battery system 1 is simplified.

Optionally, referring to FIG. 17, the relay apparatus 300 includes a second relay apparatus 302. The control apparatus 200 is configured to be respectively connected to the end battery unit 100 at the first end 11a in the first battery group 11 through the second channel 210. The second relay apparatus 302 is respectively connected to the end battery unit 100 at the second end 12b in the second battery group 12 through the third channel 310. The second relay apparatus 302 may be located at the second end 12a in the second battery group 12, so as to communicate with the end battery unit 100 at the second end 12a in the second battery group 12 through the third channel 310. Therefore, the flexibility of data transmission between the battery units 100 and between the battery units 100 and the control apparatus 200 can be improved while a communication architecture of the battery system 1 is simplified.

In some embodiments provided in the present application, the relay apparatus 300 may directly forward data between the battery units 100. Refer to FIG. 18. FIG. 18 is a schematic structural top view of a battery system according to a tenth embodiment.

The battery system 1 includes a plurality of battery units 100 and a relay apparatus 300. The plurality of battery units 100 are configured to communicate with the control apparatus 200 and transmit specified data. The relay apparatus 300 is configured to forward the specified data between at least a part of the battery units 100.

Each battery unit 100 may directly communicate with the control apparatus 200. Specifically, a communication manner may include wired communication or wireless communication. The wireless communication may include Bluetooth communication, radio frequency communication, light communication, or the like. Compared with the wired communication manner, the wireless communication manner may relieve a problem of complex routing caused by a large number of connection harnesses disposed between the battery systems 1. The specified data may include state data of the battery units 100, a control signal of the control apparatus 200, or the like. For example, the state data may include voltage data, power data, current data, temperature data, or pressure data. The control signal may include a sampling control signal for controlling the battery units 100 to acquire corresponding state data or another functional control signal for controlling the battery units 100 to perform an action such as balancing. There may be one or more relay apparatuses 300, so that the relay apparatus 300 may forward data between at least a part of battery units 100. For example, in the embodiment shown in FIG. 18, four battery units 100 and two relay apparatuses 300 are included. One relay apparatus 300 respectively enables a first battery unit 100 to communicate with a second battery unit 100, and another relay apparatus 300 enables a third battery unit 100 to communicate with a fourth battery unit 100. In some other embodiments, every two battery units 100 may communicate with each other by using one relay apparatus 300, or a larger quantity of battery units 100 may communicate with each other by using one relay apparatus 300. Details are not described herein again. Therefore, the battery units 100 and the control apparatus 200 may directly communicate with each other, thereby improving data transmission efficiency. In addition, the battery units 100 may further forward the specified data by using the relay apparatus 300, thereby improving the flexibility of data transmission between the battery units 100 and between the battery units 100 and the control apparatus 200.

Further, referring to FIG. 18, the plurality of battery units 100 respectively communicate with the control apparatus 200 through a first channel 220. The at least a part of battery units 100 respectively communicate with the relay apparatus 300 through a second channel 320. The first channel 220 and the second channel 320 may both be implemented in the wired communication manner and/or the wireless communication manner. Details are not described herein again. Therefore, the battery units 100 and the control apparatus 200 may directly communicate with each other, thereby improving data transmission efficiency. In addition, the battery units 100 may further forward the specified data by using the relay apparatus 300, thereby improving the flexibility of data transmission between the battery units 100 and between the battery units 100 and the control apparatus 200.

Finally, it should be noted that the foregoing embodiments are merely used for describing the technical solutions of the present application, but are not intended to limit the technical solutions. Although the present application is described in detail with reference to the foregoing embodiments, it should be appreciated by a person skilled in the art that modifications may still be made to the technical solutions described in the foregoing embodiments, or equivalent replacements may be made to part or all of the technical features. However, these modifications or replacements do not cause the essence of the corresponding technical solutions to deviate from the scope of the technical solutions of the embodiments of the present application, and should be covered by the scope of the claims and the specification of the present application. Especially, as long as there is no structural conflict, the various technical features mentioned in each embodiment may be combined in any way. The present application is not limited to the particular embodiments disclosed herein, but includes all technical solutions that fall within the scope of the claims.

## Claims

1. A battery system, wherein the battery system comprises:
at least two battery groups, each battery group comprising a plurality of battery units, the battery units in each battery group being configured to form a first channel that uses the battery units as nodes and sequentially transmits specified data, and the at least two battery groups being further capable of respectively forming, with a control apparatus, second channels for transmitting the specified data; and
a relay apparatus, the relay apparatus being configured to respectively form, with the at least two battery groups, third channels for transmitting the specified data, and the relay apparatus being further configured to forward the specified data between the battery groups.

2. The battery system according to claim 1, wherein at least a part of the battery units in the battery group and the control apparatus are configured to selectively transmit the specified data through the first channel in the group of the battery units, or transmit the specified data through the relay apparatus and the first channel of the another battery group.

3. The battery system according to claim 1 or 2, wherein the plurality of battery units comprise end battery units located at two ends of the battery group and a middle battery unit located between the end battery units; the first channel comprises a first sub-channel and a second sub-channel that are opposite to each other; the control apparatus is configured to be respectively connected to the end battery units located at first ends of the at least two battery groups through the second channel; and the relay apparatus is configured to be respectively connected to the end battery units located at second ends of the at least two battery groups through the third channel.

4. The battery system according to claim 3, wherein a transmission direction of the first sub-channel is from the second end to the first end, and a transmission direction of the second sub-channel is from the first end to the second end; the specified data comprises uplink data uploaded from the battery unit to the control apparatus; and the middle battery unit is configured to selectively send the uplink data to the control apparatus through the first sub-channel in the group of the middle battery unit, or send the uplink data to the control apparatus through the second sub-channel in the group of the middle battery unit, the relay apparatus, and the first sub-channel of the another battery group.

5. The battery system according to claim 4, wherein the middle battery unit is configured to send, in response to all nodes in the first sub-channel in the group of the middle battery unit being in a normal communication state, the uplink data to the control apparatus through the first sub-channel in the group of the middle battery unit;
or the middle battery unit is configured to send, in response to a downstream node in the first sub-channel in the group of the middle battery unit being in a normal communication state, the uplink data to the control apparatus through the first sub-channel in the group of the middle battery unit.

6. The battery system according to claim 4 or 5, wherein the middle battery unit is configured to send, in response to a node in the first sub-channel in the group of the middle battery unit being in an abnormal communication state, the uplink data to the control apparatus through the second sub-channel in the group of the middle battery unit, the relay apparatus, and the first sub-channel of the another battery group.

7. The battery system according to claim 6, wherein the middle battery unit located between the node in the abnormal communication state and the first end transmits the uplink data through the first sub-channel in the group of the middle battery unit, and the middle battery unit located between the node in the abnormal communication state and the second end sends the uplink data to the control apparatus through the second sub-channel in the group of the middle battery unit, the relay apparatus, and the first sub-channel of the another battery group.

8. The battery system according to any one of claims 3 to 7, wherein the transmission direction of the first sub-channel is from the second end to the first end, and the transmission direction of the second sub-channel is from the first end to the second end; the specified data comprises downlink data issued by the control apparatus to the battery unit; and the middle battery unit is configured to selectively receive the downlink data from the control apparatus through the second sub-channel in the group of the middle battery unit, or receive the downlink data from the control apparatus through the second sub-channel of the another battery group, the relay apparatus, and the first sub-channel in the group of the middle battery unit.

9. The battery system according to claim 8, wherein the middle battery unit is configured to receive, in response to all nodes in the second sub-channel in the group of the middle battery unit being in a normal communication state, the downlink data from the control apparatus through the second sub-channel in the group of the middle battery unit;
or the middle battery unit is configured to receive, in response to an upstream node in the second sub-channel in the group of the middle battery unit being in a normal communication state, the downlink data from the control apparatus through the second sub-channel in the group of the middle battery unit.

10. The battery system according to claim 9, wherein the middle battery unit is configured to receive, in response to the node in the second sub-channel in the group of the middle battery unit being in an abnormal communication state, the downlink data from the control apparatus through the second sub-channel of the another battery group, the relay apparatus, and the first sub-channel in the group of the middle battery unit.

11. The battery system according to claim 10, wherein the middle battery unit located between the node in the abnormal communication state and the first end receives the downlink data from the control apparatus through the second sub-channel in the group of the middle battery unit, and the middle battery unit located between the node in the abnormal communication state and the second end receives the downlink data from the control apparatus through the second sub-channel of the another battery group, the relay apparatus, and the first sub-channel in the group of the middle battery unit.

12. The battery system according to claim 1 or 2, wherein the plurality of battery units comprise end battery units located at two ends of the battery group and a middle battery unit located between the end battery units; the control apparatus is configured to be respectively connected to the end battery units at first ends and/or second ends of the at least two battery groups through the second channel; and the relay apparatus is configured to be respectively connected to the middle battery units of the at least two battery groups through the third channel.

13. The battery system according to claim 12, wherein the first channel comprises a first sub-channel and a second sub-channel that are opposite to each other.

14. The battery system according to claim 1 or 2, wherein the plurality of battery units comprise end battery units located at two ends of the battery group and a middle battery unit located between the end battery units; and
the at least two battery groups comprise a first battery group and a second battery group, the relay apparatus comprises a first relay apparatus, the first battery group and the second battery group are respectively disposed on two sides of the first relay apparatus, and the first relay apparatus is connected to an end battery unit at a second end in the first battery group through the third channel and is connected to an end battery unit at a first end in the second battery group through the third channel.

15. The battery system according to claim 14, wherein the control apparatus is configured to be respectively connected to an end battery unit at a first end in the first battery group and an end battery unit at a second end in the second battery group through the second channel; or
the relay apparatus comprises a second relay apparatus, the control apparatus is configured to be respectively connected to the end battery unit at the first end in the first battery group through the second channel, and the second relay apparatus is respectively connected to the end battery unit at the second end in the second battery group through the third channel.

16. The battery system according to any one of claims 1 to 15, wherein the battery unit is further configured to detect a communication state of adjacent channel nodes.

17. The battery system according to claim 16, wherein the battery unit is configured to generate, in response to not receiving the specified data from an upstream node within a first predetermined time, a communication abnormal indication for the upstream node.

18. The battery system according to claim 16 or 17, wherein the battery unit is configured to generate, in response to not receiving a reception feedback from a downstream node within a second predetermined time after sending the specified data to the downstream node, a communication abnormal indication for the downstream node.

19. The battery system according to any one of claims 1 to 18, wherein the battery unit is a battery cell; the battery cell comprises a sensor, a processor, and a communication module; the sensor is configured to acquire a parameter of the battery cell; the communication module is configured to form at least the first channel; and the processor generates the specified data based on the parameter and/or controls the sensor and/or the communication module based on the specified data.

20. A battery system, wherein the battery system comprises: a plurality of battery units, the plurality of battery units being configured to communicate with a control apparatus and transmit specified data; and
a relay apparatus, the relay apparatus being configured to forward the specified data between at least a part of the battery units.

21. The battery system according to claim 20, wherein the plurality of battery units respectively communicate with the control apparatus through a first channel, and the at least a part of battery units respectively communicate with the relay apparatus through a second channel; or
the plurality of battery units are configured into at least two battery groups, the battery units in each battery group are configured to form a first channel that uses the battery units as nodes and sequentially transmits the specified data, the at least two battery groups are capable of respectively forming, with the control apparatus, second channels for transmitting the specified data, and the relay apparatus is configured to respectively form, with the at least two battery groups, third channels for transmitting the specified data and to forward the specified data between the battery groups.

22. A power consuming device, wherein the power consuming device comprises the battery system according to any one of claims 1 to 21.
